# EUROPEAN PATENT SPECIFICATION

(11) **EP 3 531 593 B1**
(45) Date of publication and mention of the grant of the patent: **01.01.2025**
(21) Application number: 17867030.3
(22) Date of filing: 31.07.2017
(51) Int. Cl.: H04L 1/00, H04L 1/1607, H04L 5/00, H04L 27/26

(54) **METHOD, ACCESS POINT, AND SYSTEM FOR TRANSMITTING MULTI-STATION CONTROL FRAME**
VERFAHREN, ZUGANGSPUNKT UND SYSTEM ZUR ÜBERTRAGUNG EINES STEUERUNGSRAHMENS FÜR MEHRERE STATIONEN
PROCÉDÉ, POINT D'ACCÈS, ET SYSTÈME DE TRANSMISSION DE TRAME DE COMMANDE MULTI-STATION

(30) Priority: 01.11.2016 CN 201610942629
(43) Date of publication of application: 28.08.2019
(60) Divisional application: 24211554.1
(73) Proprietor: Huawei Technologies Co., Ltd., Longgang District Shenzhen, Guangdong 518129 (CN)
(72) Inventor: GAN, Ming, Shenzhen Guangdong 518129 (CN); JIA, Jia, Shenzhen Guangdong 518129 (CN); YANG, Xun, Shenzhen Guangdong 518129 (CN)
(74) Representative: Gill Jennings & Every LLP
(86) International application number: PCT/CN2017/095096
(87) International publication number: WO 2018/082358

(56) References cited:
- WO-A1-2016/069729
- CN-A- 103 999 509
- CN-A- 104 853 385
- US-A1- 2016 037 441
- YOUNG HOON KWON (NEWRACOM): "HE NDP frame for sounding ; 11-15-1051-01-00ax-he-ndp-frame-for-sounding", IEEE DRAFT; 11-15-1051-01-00AX-HE-NDP-FRAME-FOR-SOUNDING, IEEE-SA MENTOR, PISCATAWAY, NJ USA, vol. 802.11ax, no. 1, 14 September 2015 (2015-09-14), pages 1 - 14, XP068098241

## Description

### TECHNICAL FIELD

The present invention relates to the field of communications technologies, and in particular, to a method for transmitting a multi-station control frame, an access point, and a system.

### BACKGROUND

In the prior art, battery capacities of all terminal devices are limited, and some terminals even use coin batteries. Therefore, how to reduce power consumption of a terminal device is a problem on which a next-generation Wi-Fi protocol focuses.

An orthogonal frequency division multiple access (Orthogonal Frequency Division Multiple Access, OFDMA for short) transmission technology is introduced in 802.11ax, so as to support simultaneous data sending and receiving for a plurality of stations, and increase a system throughput. Correspondingly, a multi-station control frame such as a multi-station block acknowledgement (Multi-STA Block Ack, M-BA for short) frame is also introduced. In an Internet of Things Wi-Fi protocol, multi-station scheduling and transmission like that in 802.11ax may still exist. However, to reduce power consumption of a terminal, after receiving a data packet of each station, instead of immediately replying with an acknowledgement frame or a block acknowledgement frame, an access point (Access Point, AP for short) replies, with a multi-station block acknowledgement frame in a unified manner in a specific time period, to stations that previously send data packets.

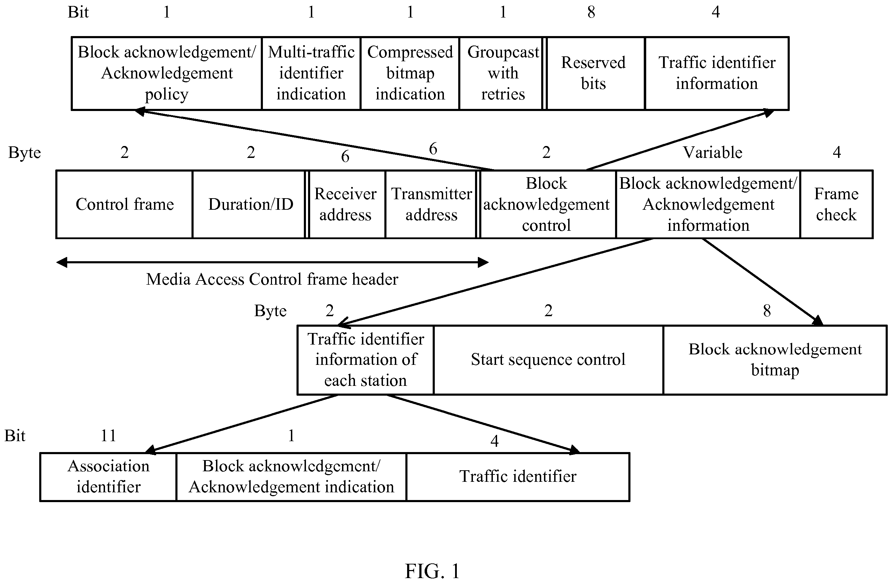

Specifically, an acknowledgement in an M-BA form means that: an AP broadcasts concatenated acknowledgement frames to a plurality of stations, and an M-BA frame is defined by using a multi-traffic identifier block acknowledgement (Multi-traffic identifier Block Ack, Multi-TID BA for short) frame structure. For details, refer to FIG. 1 (FIG. 1 shows Media Access Control (medium access control, MAC for short) frame fields in the M-BA frame).

The MAC frame field includes a control frame field (occupying two bytes), a duration/ID field (occupying two bytes), a receiver address (occupying six bytes), a transmitter address (occupying six bytes), a BA control field (occupying two bytes), a BA/ACK information field (occupying a variable quantity of bytes), and a frame check sequence field (occupying four bytes).

The BA control field includes a BA/ACK acknowledgement policy (occupying one bit), an indication (occupying one bit) indicating a plurality of TIDs, an indication (occupying one bit) indicating a compressed bitmap, a groupcast with retries (Groupcast with retries, GCR for short) field (occupying one bit), reserved bits (occupying eight bits), and TID information (occupying 14 bits). The TID information is used to indicate a priority of the data frame.

There may be a plurality of pieces of BA/ACK information (occupying a variable quantity of bytes). Each piece of BA/ACK information is corresponding to one of the plurality of stations, and the information needs to be sent to the station corresponding to the information. Each piece of BA/ACK information includes per TID information (occupying two bytes). Optionally, if the AP replies to the station with acknowledgement information in a BA form, the BA/ACK information further includes start sequence control (occupying two bytes) and a BA bitmap (occupying eight bytes).

The per TID information field includes association identifier (association identifier, AID for short) information (occupying 11 bits), a BA/ACK indication new message (occupying one bit), and a traffic identifier (occupying one bit) of the station. The AID information is used to indicate an identifier of the station corresponding to the BA/ACK information.

It can be learned from FIG. 1 that the MAC frame field in the multi-station block acknowledgement frame occupies an excessively large quantity of bytes (more than 22 bytes). In addition, narrowband low-rate transmission is used in the Internet of Things Wi-Fi protocol, finally causing an excessively long frame transmission time, and increasing power consumption of a terminal.

Therefore, an NDP multi-station control frame with no redundant information such as a MAC frame header is provided, so as to reduce a control frame transmission time and power consumption of a terminal.

WO 2016/069729 relates to null data packet, NDP, frame structure for wireless communication.

### SUMMARY

The invention has been defined in the independent claims. Further specific technical features have been defined in the dependent claims.

Based on the foregoing technical solutions provided by the invention, according to the method for transmitting a multi-station control frame that is provided in the implementations of the present disclosure, the sent or received multi-station control frame includes only the legacy preamble field and the new preamble field, and occupies much fewer bytes than the 802.11ax multi-station control frame. Therefore, duration in which the multi-station control frame occupies a channel during transmission can be reduced. The effect is more significant when data is transmitted by using a narrowband.

### BRIEF DESCRIPTION OF DRAWINGS

FIG. 1 is a schematic structural diagram of a MAC frame field of a multi-station block acknowledgement frame;
FIG. 2 is a schematic flowchart of a method for transmitting a multi-station control frame according to an implementation of the present disclosure;
FIG. 3 is a schematic structural diagram of transmitting data frames and sending a multi-station block acknowledgement frame between an AP and a plurality of stations according to the present disclosure;
FIG. 4 is a schematic structural diagram of transmitting a request frame and a first response frame between an AP and a plurality of stations in two manners according to the present disclosure;
FIG. 5 is a schematic diagram of a frame structure of a multi-station control frame based on the 802.11ax protocol;
FIG. 6 is a schematic structural diagram of an NDP multi-station control frame according to the present disclosure;
FIG. 7 is a schematic structural diagram of frame structures of a first signal field and a second signal field of an NDP multi-station request-to-send frame according to the present disclosure;

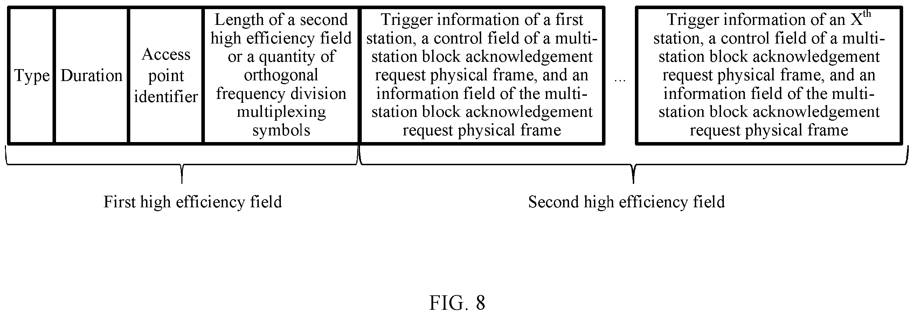

FIG. 8 is a schematic structural diagram of frame structures of a first signal field and a second signal field of an NDP multi-station block acknowledgement request frame according to the present disclosure;
FIG. 9 is a schematic structural diagram of an Internet of Things multi-station control frame according to the present disclosure;
FIG. 10 is a schematic diagram of an apparatus structure of an access point according to an implementation of the present disclosure; and
FIG. 11 is a schematic structural diagram of a transmission system according to an implementation of the present disclosure.

### DESCRIPTION OF IMPLEMENTATIONS

To make the objectives, technical solutions, and advantages of this invention clearer, the following further describes various implementations in detail with reference to the accompanying drawings.

An implementation of the present disclosure provides a method for transmitting a null data packet multi-station control frame. In a specific implementation, the method includes the following step:

Step 210: Send a multi-station control frame to a plurality of stations.

Specifically, when the multi-station control frame is a request frame, the request frame is used to request each of the plurality of stations to send a first response frame corresponding to the multi-station control frame. When receiving the request, the plurality of stations send, to an access point, the first response frame corresponding to the multi-station control frame. Therefore, the method performed by the access point further includes step 220: Receive the first response frame that is corresponding to the multi-station control frame and that is sent by each of the plurality of stations.

In another specific implementation, the method includes: sending a multi-station control frame to each of a plurality of stations, where when the multi-station control frame is a second response frame, the second response frame is used to respond to data frames, management frames, or control frames that are transmitted by the plurality of stations.

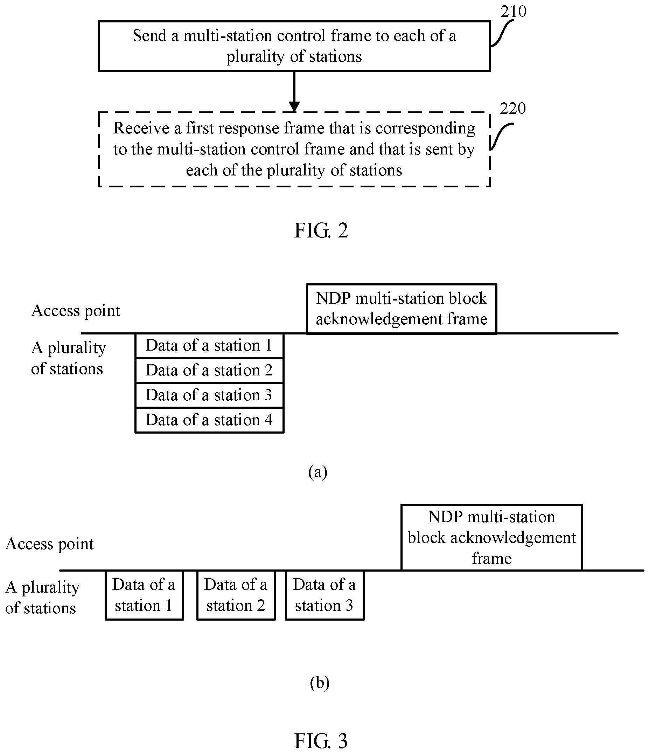

It should be understood that the plurality of stations may send any of the data frames, the management frames, and the control frames to the AP in an orthogonal frequency division multiple access (Orthogonal Frequency Division Multiple Access, OFDMA for short) form or a multi-user multiple-input multiple-output (Multi-User Multiple-Input Multiple-Output, MU-MIMO for short) form. For example, if the data frames are sent, the data frames may be simultaneously sent, or data may be successively sent to the AP. Correspondingly, if the plurality of stations simultaneously send data to the AP, after receiving the data frames sent by the plurality of stations, the AP may immediately and simultaneously send the second response frame (for example, an NDP multi-station block acknowledgement frame) to each of the plurality of stations. If the plurality of stations successively send the data frames to the AP, after receiving the data frames sent by the plurality of stations, the AP sends the second response frame to each of the plurality of stations at a specified time. The foregoing two transmission modes are specifically corresponding to a schematic structural diagram of transmitting data frames and sending an NDP multi-station block acknowledgement frame between an AP and a plurality of stations in FIG. 3. The first transmission mode is corresponding to FIG. 3(a), and the second transmission mode is corresponding to FIG. 3(b).

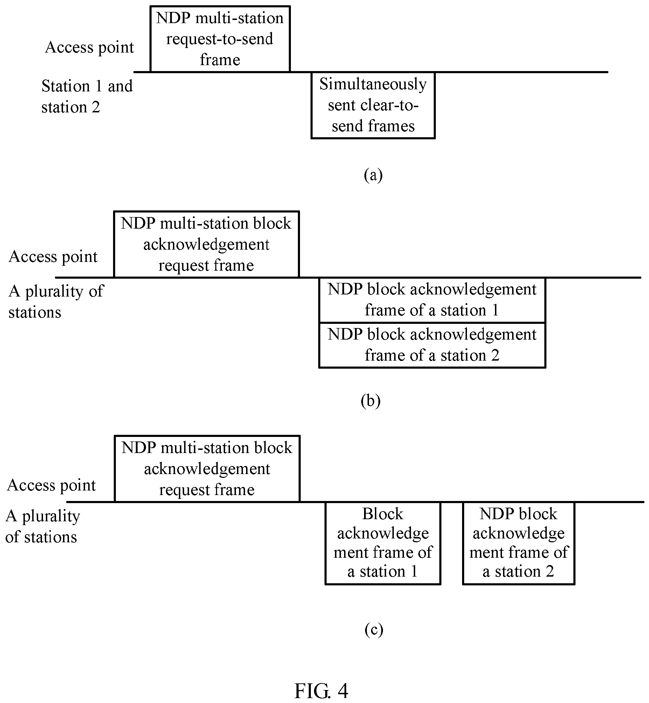

If the AP sends the request frame to the plurality of stations, and for example, the request frame is an NDP multi-station block acknowledgement request frame, after receiving the request frame, the plurality of stations simultaneously send the first response frame to the AP. Alternatively, each of the plurality of stations may sequentially send the first response frame to the AP based on a sequence number that is corresponding to a station identifier of each of the plurality of stations and that is in the request frame sent by the AP. For example, the first response frame is the NDP multi-station block acknowledgement frame. Similar to FIG. 3, FIG. 4 is a schematic structural diagram of transmitting a request frame and a first response frame between an AP and a plurality of stations in two manners. In FIG. 4(a), the AP sends an NDP multi-station request-to-send frame to the plurality of stations (for example, a station 1 and a station 2), and the plurality of stations simultaneously send clear-to-send frames to the AP. The clear-to-send frames sent by the plurality of stations to the AP include same content and use a same scrambler seed. FIG. 4(b) is a schematic structural diagram of simultaneously sending, by each of a plurality of stations, an NDP block acknowledgement frame to an AP when the AP simultaneously sends an NDP multi-station block acknowledgement request frame to the plurality of stations. FIG. 4(c) is a schematic structural diagram of successively sending, by a plurality of stations, NDP block acknowledgement frames to an AP based on a sequence of station identifiers in an NDP multi-station request-to-send frame when the AP simultaneously sends an NDP multi-station block acknowledgement request frame to the plurality of stations.

As described in the background, because a multi-station control frame occupies an excessively large quantity of bytes in a transmission process of the multi-station control frame, duration in which the multi-station control frame occupies a channel during transmission is relatively long. As a result, system power consumption increases. However, an NDP multi-station control frame is designed in the present disclosure, so that a transmission time and power consumption can be reduced in a transmission process of the multi-station control frame. The following first describes a frame structure of a legacy multi-station control frame. Details are as follows.

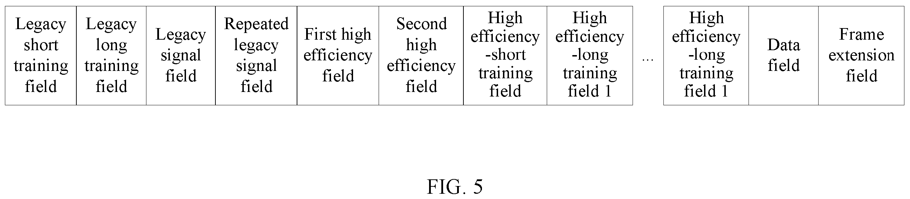

FIG. 5 is a schematic diagram of a frame structure of an 802.11ax-based multi-station control frame. Specifically, as shown in FIG. 5, the multi-station control frame includes a legacy preamble field, a new preamble field, a service field, a Media Access Control (Media access, MAC for short) frame field, a trailer, a padding bit, a frame extension field, and the like. The service field, the Media Access Control frame field, the trailer, and the padding bit are collectively referred to as a data field. Subfields included in the Media Access Control frame field have been described in detail in the specification, and details are not described herein again. The legacy preamble field includes a legacy-short training field (legacy-short training field, L-STF for short), a legacy-long training field (legacy-long training field, L-LTF for short), and a legacy-signal field (Legacy-signal field, L-SIG for short). The new preamble field includes a repeated legacy-signal field (repeated legacy-signal field, RL-SIG), a high efficiency-signal field A (high efficient-signal field A, HE-SIGA for short), a high efficiency-signal field B (high efficient-signal field B, HE-SIGB for short), a high efficiency-short training field (high efficient-short training field, HE-STF for short), and high efficiency-long training fields (high efficient-long training field, HE-LTF) 1 to N (N is a positive integer greater than or equal to 1).

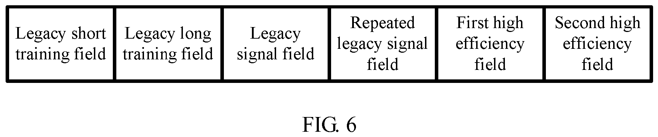

In the frame structure of the multi-station control frame, the legacy preamble field and the new preamble field are physical layer fields. A research focus of the present disclosure is to design an NDP multi-station control frame. Compared with the multi-station control frame shown in FIG. 5, the NDP multi-station control frame reduces a quantity of bytes occupied by a multi-station control frame, so as to reduce a transmission time of the multi-station control frame and power consumption of a terminal. A frame structure of the NDP multi-station control frame is specifically shown in FIG. 6.

FIG. 6 is a schematic diagram of a frame structure of an NDP multi-station control frame according to an implementation of the present disclosure. The NDP control frame includes:
a legacy preamble field and a new preamble field, and does not include the service field, the Media Access Control frame field, the trailer, the padding bit, the frame extension field, or the like in FIG. 2. The new preamble field includes a first signal field and a second signal field.

Specifically, the legacy preamble field includes an L-STF field, an L-LTF field, an L-SIG field, and an RL-SIG field. The first signal field in the new preamble field includes first parameter information jointly owned by a plurality of stations, and second parameter information associated with the second signal field. The first parameter information jointly owned by the plurality of stations may include identification information of a transmit end that sends data to each of the plurality of stations. For example, if the transmit end is an AP, the identification information of the transmit end may be an AP identifier, an association identifier allocated by the AP to the AP, a partial association identifier, a MAC address of the AP, a partial MAC address of the AP, a basic service set (basic service set, BSS) color, or the like. The second signal field includes control information in a one-to-one correspondence with each of the plurality of stations.

The first signal field may further include an overloading subfield. The overloading subfield is used to carry first identification information, so that when receiving the frame, a receive end may identify, based on the first identification information, a type of the frame as an NDP multi-station control frame, or a frame existing before overloading of a multi-station control frame. When the type of the frame is identified as the NDP multi-station control frame based on the first identification information, the first identification information is first indication information. The first indication information herein may be a field value of the overloading subfield. Alternatively, the overloading subfield is used to carry second identification information, so that when receiving the NDP multi-station control frame, a receive end can identify, based on the second identification information, a type of the frame as an NDP multi-station block acknowledgement frame, or a frame existing before overloading of a multi-station control frame. Similarly, when the type of the frame is identified as the NDP multi-station block acknowledgement frame based on the second identification information, the second identification information is second indication information. The second indication information herein may be a field value of the overloading subfield.

For example, the frame existing before the overloading is an 802.11ax packet-multiple user physical layer convergence procedure protocol data unit (Multiple user PLCP (physical layer convergence procedure, MU PPDU for short) protocol data unite) structure, hereinafter referred to as an 802.11ax packet.

For example, when the field value of the overloading subfield is a first value (for example, 1), it indicates that the frame is the NDP multi-station block acknowledgement frame. When the field value of the overloading subfield is a second value (for example, 0), it indicates that the frame is the frame existing before the overloading, for example, the 802.11ax packet (also referred to as an 802.11ax frame), that is, identification information carried in the overloading subfield is the second identification information corresponding to the NDP multi-station block acknowledgement frame. When receiving the frame, the receive end may determine whether the second identification information is the second indication information and identify that the frame is the NDP multi-station block acknowledgement frame. In addition, each value of the overloading subfield indicates a unique and fixed meaning. To be specific, when the frame is subsequently sent, if the value of the overloading subfield of the NDP multi-station control frame received by the receive end is the first value, it is considered that the frame is the NDP multi-station block acknowledgement frame; or if the value of the overloading subfield of the NDP multi-station control frame received by the receive end is the second value, it is considered that the frame is the frame existing before the overloading.

In another implementation, the overloading subfield is used to carry first identification information. When a field value of the overloading subfield is a first value (for example, 1), it merely indicates that the frame is an NDP multi-station control frame, and this indicates that the first identification information is first indication information. When a field value of the overloading subfield is a second value (for example, 0), it indicates that the frame is a frame existing before overloading, for example, an 802.11ax packet (also referred to as an 802.11ax frame). In this implementation, the first signal field further includes a type indication field, used to determine which type of control frame the NDP multi-station control frame specifically is. A type of the NDP multi-station control frame includes at least one of an NDP multi-station block acknowledgement frame, an NDP multi-station request-to-send frame, and an NDP multi-station block acknowledgement request frame. Correspondingly, there may be a plurality of cases of a value of the type indication field. For example, the field value of the type indication field may be 01, 10, or 11. When the field value of the type indication field is 01, it indicates that the NDP multi-station control frame is the NDP multi-station block acknowledgement frame, and the frame may be understood as a response frame; when the field value of the type indication field is 10, it indicates that the NDP multi-station control frame is the NDP multi-station request-to-send frame; or when the field value of the type indication field is 11, it indicates that the NDP multi-station control frame is the NDP multi-station block acknowledgement request frame. The NDP multi-station request-to-send frame and the NDP multi-station block acknowledgement request frame may be understood as request frames. Because the field value of the type indication field varies, the type of the NDP multi-station control frame also changes accordingly. For example, when the transmit end sends the NDP multi-station control frame for a first time, the transmit end may send the NDP multi-station block acknowledgement frame; and when the transmit end sends the NDP multi-station control frame for a second time, the NDP multi-station control frame may be the NDP multi-station block acknowledgement request frame.

Based on a design of an 802.1 1ax packet structure, in the present disclosure, the frame existing before the overloading is the 802.11ax packet, a frame obtained after the overloading is the NDP multi-station control frame or the NDP multi-station block acknowledgement frame, as described in the foregoing two implementations. The first signal field is an HE-SIGA in 802.11ax, and the second signal field is an HE-SIGB in 802.1 1ax. Fields included in the HE-SIGA and a quantity of bits occupied by each field are shown in Table 1.

**Table 1**

| **Field** | **Quantity of bits** |
|---|---|
| DL/UL | 1 |
| BSS color | 6 |
| Spatial multiplexing | 4 |
| TXOP duration | 7 |
| Bandwidth | 3 |
| SIGB MCS | 3 |
| SIGB DCM | 1 |
| SIGB symbol quantity | 4 |
| SIGB compression | 1 |
| HE-LTF symbol quantity | 3 |
| GI+LTF size | 2 |
| LDPC additional symbol | 1 |
| STBC | 1 |
| Doppler | 1 |
| Frame extension padding factor | 2 |
| Frame extension fuzzy indication | 1 |
| Reserved bit | 1 |
| CRC | 4 |
| Trailer bit | 6 |

Specific meanings of the foregoing fields in Table 1 are well-known by a person in the art. A meaning of each field in the table is not described in detail herein. However, it should be noted that, as shown in Table 1, the HE-SIGA has one reserved bit that may be used as the overloading subfield in the foregoing descriptions; or the SIGB MCS field includes three bits (three binary numbers: 000 to 111), 0 to 5 have been used, and 6 and 7 are not used and may be used as the overloading subfield. In other words, the overloading subfield is the reserved bit in the HE-SIGA, or is an unused value in the modulation and coding scheme included in the HE-SIGA.

When the field value of the overloading subfield is set to the first value, it indicates that subfields in the HE-SIGA need to be divided anew, and new content needs to be written into subfields. In other words, other bits occupied by the HE-SIGA need to be re-divided into different subfields, and bits occupied by the subfields obtained through the division are also re-defined correspondingly. Specifically, the re-division includes: first defining that one subfield needs to be obtained through division in the HE-SIGA, to store the identification information of the transmit end that sends the data to each of the plurality of stations, where the identification information is specifically used to determine an identity of the transmit end. For example, if the transmit end is an access point, the identification information may be an identifier corresponding to the access point. Specifically, the AP identifier may be a MAC address of the AP, a partial MAC address of the AP, a basic service set color (the basic service set color is a type of AP identifier), or the like. It should be noted that, because the MAC address occupies six bytes, and first one or more bytes of MAC addresses may be the same, the AP identifier may include only last one or more bytes of the MAC address, so as to distinguish between different addresses. In other words, this field is equivalent to the transmitter address field in the MAC frame field described in the background. The transmitter address field in the MAC frame field needs to occupy six bytes. However, in this application, only one or more bits in the HE-SIGA may be occupied. Therefore, a quantity of bytes occupied by the multi-station control frame is greatly reduced.

Correspondingly, the second parameter information associated with the HE-SIGB may include: a quantity of OFDM symbols of the HE-SIGB, and a modulation and coding scheme of the HE-SIGB field. Alternatively, the second parameter information associated with the HE-SIGB may include: a quantity of stations, and a modulation and coding scheme of the HE-SIGB field. The quantity of OFDM symbols of the HE-SIGB field has a function that is similar to that of the quantity of stations, and both the quantity of OFDM symbols and the quantity of stations are used to determine a length of the HE-SIGB field. The modulation and coding scheme of the HE-SIGB field is used to determine a data transmission rate. A reason why the length of the HE-SIGB field can be determined based on the quantity of stations is that each piece of station information includes a same quantity of bits. Therefore, when the quantity of stations is determined, the HE-SIGB field may also be indirectly determined.

The control information that is in a one-to-one correspondence with each of the plurality of stations and that is in the second signal field includes acknowledgement information of each of the plurality of stations, where the acknowledgement information of each station includes a station identifier and an acknowledgement/block acknowledgement indication, or the acknowledgement information of each station includes an acknowledgement/block acknowledgement identifier and an acknowledgement/block acknowledgement indication. The station identifier may be an association identifier or a partial association identifier of the station. The association identifier herein represents identity information of the station. For example, if the station is managed by an AP, the AP generates an internal management identifier for the station. The internal management identifier is used by the AP to identify the station. In other words, a function of the station identifier is to determine a station that receives a block acknowledgement frame sent by the AP, namely, determine an address for receiving information. In this case, likewise, one or more bits are occupied, to replace a receiver address field (the receiver address field occupies six bytes) in a MAC frame field in an original control frame. In this way, a quantity of bytes occupied by the control frame is reduced. The acknowledgement/block acknowledgement identifier has a function that is the same as or similar to that of the station identifier, and is mainly used to determine a station that needs to receive (or send) the control frame. The acknowledgement/block acknowledgement identifier may include a combination of at least one bit of a scrambler initialization seed and at least one bit of an association identifier. For example, acknowledgement identifier bits include a combination of five low-order bits of the scrambler initialization seed and four low-order bits of the association identifier. Alternatively, block acknowledgement identifier bits include a combination of seven low-order bits of the scrambler initialization seed and five low-order bits of the association identifier. The association identifier may occupy one or more bits of the scrambler initialization seed, for example, seven low-order bits of the scrambler initialization seed. Alternatively, the acknowledgement/block acknowledgement identifier may include only one or more bits of the scrambler initialization seed. In a case, if a preset length of the acknowledgement/block acknowledgement identifier exceeds a quantity of bits occupied by the scrambler initialization seed, 0 or 1 may be added to an end of the scrambler initialization seed, to satisfy the preset length of the acknowledgement/block acknowledgement identifier. Alternatively, the acknowledgement/block acknowledgement identifier may include only one or more bits of the association identifier. Similarly, if a quantity of bits occupied by the association identifier is insufficient to satisfy the preset length of the acknowledgement/block acknowledgement identifier, 0 or 1 may also be added to an end of the association identifier, to obtain an acknowledgement/block acknowledgement identifier of the present length. The acknowledgement/block acknowledgement indication is used to determine whether the multi-station block acknowledgement frame is sent in a form of an acknowledgement frame or a block acknowledgement frame. When the acknowledgement information of each of the plurality of stations includes the block acknowledgement indication, the acknowledgement information of each of the plurality of stations further includes a start sequence value and a block acknowledgement bitmap. It is determined that each piece of acknowledgement information in block acknowledgement information is corresponding to one sequence number in the block acknowledgement bitmap. The start sequence value indicates a start sequence number, in the block acknowledgement bitmap, of first acknowledgement information in the block acknowledgement information. The block acknowledgement information herein is used to determine whether a MAC protocol data unit data frame sent by a transmit end is successfully sent.

Further, because the HE-SIGB has a variable length, when a length of the HE-SIGB field is fixed, the HE-SIGA and the HE-SIGB field may be combined into one field. In this case, the field does not include information such as the quantity of symbols of the HE-SIGB and the modulation and coding scheme of the HE-SIGB. A reason is that, in this case, the length of the HE-SIGB field no longer needs to be determined, and a transmission rate of the HE-SIGB does not need to be determined either.

In a case, if the type of the NDP multi-station control frame is the NDP multi-station request-to-send frame, after the AP sends the frame and a specified station receives the frame, the station replies with a clear-to-send frame based on a channel specified by the NDP multi-station request-to-send frame. A frame structure of the NDP multi-station request-to-send frame is similar to a frame structure of the NDP multi-station block acknowledgement frame described above. An only difference lies in that content stored in a first signal field and a second signal field is slightly different.

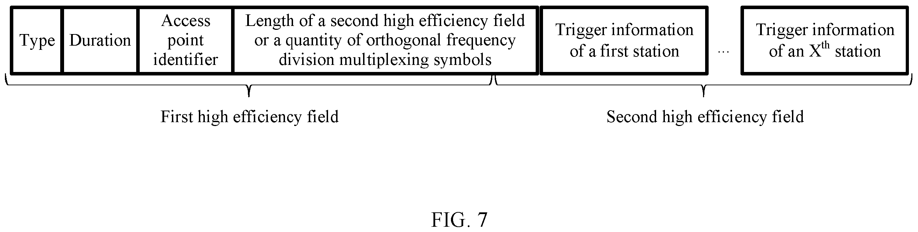

Specifically, frame structures of the first signal field and the second signal field of the NDP multi-station request-to-send frame are shown in FIG. 7. The first signal field includes the first parameter information jointly owned by the plurality of stations, namely, the identification information of the transmit end that sends the data to each of the plurality of stations. In addition, the first signal field further includes transmission duration of the NDP multi-station request-to-send frame. Information that is associated with the second signal field and that is included in the first signal field may include a length of the second signal field or a quantity of orthogonal frequency division multiplexing symbols. Apparently, the transmission duration of the NDP multi-station request-to-send frame is used to indicate duration in which the NDP multi-station request-to-send frame needs to occupy a channel. The quantity of orthogonal frequency division multiplexing symbols has a function that is the same as that of the length of the second signal field, and both the quantity of orthogonal frequency division multiplexing symbols and the length of the second signal field are used to indicate a quantity of bytes occupied by the second signal field. The control information that is in a one-to-one correspondence with each of the plurality of stations and that is in the second signal field includes NDP request-to-send frame information of each of the plurality of stations. Specifically, the NDP request-to-send frame information of each station is trigger information of the station. The trigger information may include one or a combination of the following: a station identifier, a subchannel sequence number of a response frame of a clear-to-send frame, a coding type, a modulation and coding scheme, a dual-carrier modulation indication, a flow allocation indication, and the like. If 20 MHz is used as basic bandwidth for the SIGA and SIGB fields, subchannel sequence numbers of response frames of clear-to-send frames may be shown in Table 2.

**Table 2**

| | |
|---|---|
| 00 | Primary 20 MHz channel |
| 01 | Primary 40 MHz channel |
| 10 | Primary 80 MHz channel |
| 11 | Primary 160 MHz channel |

In another case, if the type of the NDP multi-station control frame is the NDP multi-station block acknowledgement request frame, after the AP sends the frame and a specified station receives the frame, the station replies with an acknowledgement/block acknowledgement frame based on a frequency-domain resource block specified by the NDP multi-station block acknowledgement request frame. A frame structure of the NDP multi-station block acknowledgement request frame is similar to the frame structures of the foregoing two types of frames. An only difference lies in that content stored in a first signal field and a second signal field is slightly different. Specifically, frame structures of the first signal field and the second signal field of the NDP multi-station block acknowledgement request frame are shown in FIG. 7.

The first signal field includes the first parameter information jointly owned by the plurality of stations, namely, the identification information of the transmit end that sends the data to each of the plurality of stations. In addition, the first signal field further includes transmission duration of the NDP multi-station block acknowledgement request frame. The second parameter information associated with the second signal field includes a length of the second signal field or a quantity of orthogonal frequency division multiplexing symbols. Apparently, the transmission duration of the NDP multi-station block acknowledgement request frame is used to indicate duration in which the NDP multi-station block acknowledgement request frame needs to occupy a channel. The quantity of orthogonal frequency division multiplexing symbols has a function that is the same as that of the length of the second signal field, and both the quantity of orthogonal frequency division multiplexing symbols and the length of the second signal field are used to indicate a quantity of bytes occupied by the second signal field. The control information that is in a one-to-one correspondence with each of the plurality of stations and that is in the second signal field includes: trigger information of each of the plurality of stations, a control field of the NDP multi-station block acknowledgement request frame, and an information field of the NDP multi-station block acknowledgement request frame. The trigger information of each of the plurality of stations may include one or a combination of the following information: a station identifier, a resource allocation indication, a coding type, a modulation and coding scheme, a dual-carrier modulation indication, a flow allocation indication, and the like. The information field of the NDP multi-station block acknowledgement request frame includes a start sequence control field.

Specifically, the first signal field may be a high efficiency-signal field A in an 802.11ax packet, and the second signal field may be a high efficiency-signal field B in the 802.11ax packet. Step 320: Delete a Media Access Control frame field from the multi-station control frame, to obtain a simplified multi-station control frame.

From a comparison between the frame structure of the NDP multi-station control frame shown in FIG. 6 and the current 802. 11ax frame structure shown in FIG. 5, it can be learned that the frame structure in FIG. 6 is simpler, and a quantity of occupied bytes is greatly reduced. The new NDP multi-station control frame shown in FIG. 6 may be understood as being obtained by simplifying the frame structure in FIG. 6: adding core content (including transmitter address information, identification information of each station, a block acknowledgement/acknowledgement indication, a start sequence control field, a block acknowledgement bitmap, and the like) of the MAC frame field in the data field in FIG. 6 to a physical layer field; and then deleting the MAC frame field. In addition, it can be learned from the foregoing descriptions that the data field in FIG. 6 includes the Media Access Control frame field and the service field, and the service field is a transitional field. When the multi-station control frame is simplified, the service field may also be deleted, and the trailer, the padding bit, and the frame extension field may also be deleted. The HE-STF field and the HE-LTF field in FIG. 6 serve the service field. If the service field is deleted, the HE-STF field and the HE-LTF field may also be omitted. Therefore, fields of an NDP frame structure include only an L-STF field, an L-LTF field, an L-SIG field, an RL-SIG field, a first signal field, a second signal field, and the like.

It should be understood that the foregoing NDP multi-station control fields may be understood as a frame structure designed based on control fields of the 802.11ax multi-station frame.

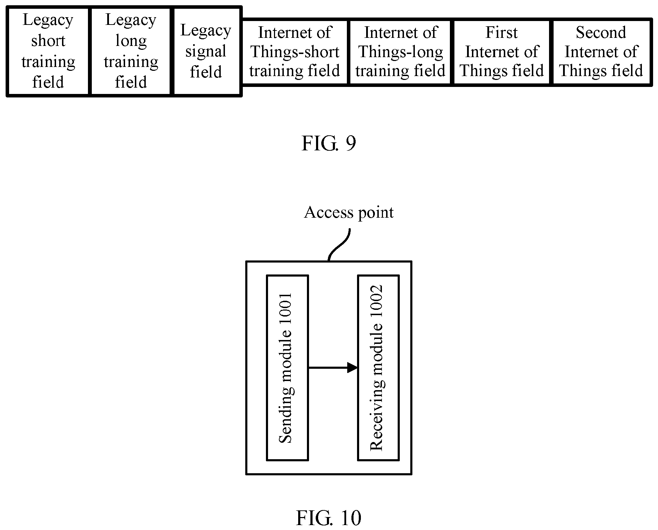

In an optional case, a new frame structure of an NDP multi-station control frame may be further designed based on an Internet of Things Wi-Fi protocol. The NDP multi-station control frame is an Internet of Things multi-station control frame, as shown in FIG. 9. The Internet of Things multi-station control frame may operate at a free-of-charge frequency band of 2.4 GHz, 5 GHz, or 1 GHz. Specifically, the Internet of Things multi-station control frame also includes a legacy preamble field and a new preamble field. The legacy preamble field herein and the legacy preamble field described above include same subfields, and the legacy preamble field needs to be used to transmit data at bandwidth at which a frequency is 20 MHz. The new preamble field is an Internet of Things preamble field. The first signal field is a first Internet of Things-field (Internet of things-signal field 1, IOT-SIG1 for short). The second signal field is a second Internet of Things-field (Internet of things-signal field 2, IOT-SIG2 for short). The Internet of Things preamble field further includes an Internet of Things-short training field (Internet of things-short training field, IOT-STF for short) and an Internet of Things-long training field (Internet of things-long training field, IOT-LTF for short). The Internet of Things preamble field may be used to transmit data at bandwidth less than 20 MHz, for example, 2 M, 4 M, 8 M, 16 M, 5 M, or 10 M, or may be used to transmit data at bandwidth of 20 MHz. In other words, bandwidth occupied by the legacy preamble field is greater than or equal to bandwidth occupied by the Internet of Things preamble field.

Although structures of the first signal field and the second signal field of the Internet of Things multi-station control frame are slightly different, content stored in subfields of the first signal field and the second signal field and functions of the subfields are the same as or similar to the foregoing descriptions. Details are not described herein again.

In addition, it should be further noted that, when the Internet of Things multi-station control frame is an NDP multi-station request-to-send frame, if a narrowband (less than 20 MHz) is used as basic bandwidth for the IOT-SIG1 and IOT-SIG2 fields, and there are a total of N portions of basic bandwidth, for example, the narrowband is 2 MHz, and there are a total of eight portions of 2 MHz, subchannel sequence numbers of response frames of clear-to-send frames may be shown in Table 3.

**Table 3**

| | |
|---|---|
| 00 | Primary 2 MHz channel |
| 01 | Primary 4 MHz channel |
| 10 | Primary 8 MHz channel |
| 11 | Primary 16 MHz channel |

Compared with the frame structure of the multi-station control frame described in the background, in the Internet of Things multi-station control frame, core content (including transmitter address information, identification information of each station, a block acknowledgement/acknowledgement indication, a start sequence control field, a block acknowledgement bitmap, and the like) of a MAC field in a legacy multi-station control frame is also added to a physical layer field, so as to greatly reduce a quantity of bytes occupied by the multi-station control frame, and reduce duration in which the multi-station control frame occupies a channel during transmission. An effect is especially significant when data is transmitted by using a narrowband.

An implementation of the present disclosure further provides an access point. The access point is corresponding to the method process shown in FIG. 2. For related features, mutual reference may be made. A structure of the access point is specifically shown in FIG. 10. FIG. 10 is a schematic structural diagram of an access point according to an implementation of the present disclosure.

In a case, the access point includes a sending module 1001 and a receiving module 1002.

Specifically, the sending module 1001 is configured to send a multi-station control frame to a plurality of stations, where when the multi-station control frame is a request frame, the request frame is used to request each of the plurality of stations to send a first response frame corresponding to the multi-station control frame; and the receiving module 1002 is configured to receive the first response frame that is corresponding to the multi-station control frame and that is sent by each of the plurality of stations.

The multi-station control frame includes a legacy preamble field and a new preamble field, and does not include a service field, a Media Access Control frame field, a trailer, a padding bit, or a frame extension field. The new preamble field includes a first signal field and a second signal field. Specifically, the first signal field includes first parameter information jointly owned by the plurality of stations, and second parameter information associated with the second signal field. The first parameter information jointly owned by the plurality of stations includes identification information of a transmit end that sends data to each of the plurality of stations. The second signal field includes control information in a one-to-one correspondence with each of the plurality of stations.

In another case, the access point includes a sending module 1001. The sending module 1001 is configured to send a multi-station control frame to a plurality of stations. When the multi-station control frame is a second response frame, the second response frame is used to respond to data frames, management frames, or control frames that are transmitted by the plurality of stations.

The multi-station control frame includes a legacy preamble field and a new preamble field, and does not include a service field, a Media Access Control frame field, a trailer, a padding bit, or a frame extension field. The new preamble field includes a first signal field and a second signal field. Specifically, the first signal field includes first parameter information jointly owned by the plurality of stations, and second parameter information associated with the second signal field. The first parameter information jointly owned by the plurality of stations includes identification information of a transmit end that sends data to each of the plurality of stations. The second signal field includes control information in a one-to-one correspondence with each of the plurality of stations.

According to the claimed invention, the first signal field may include an overloading subfield, and the overloading subfield includes first indication information that identifies the multi-station control frame as an NDP multi-station control frame.

Alternatively, the first signal field may include an overloading subfield, and the overloading subfield includes second indication information that identifies the multi-station control frame as an NDP multi-station block acknowledgement frame. Further, preferably, when the overloading subfield includes the first indication information that identifies the multi-station control frame as the NDP multi-station control frame, the first signal field further includes a type indication field of the NDP multi-station control frame. The type indication field is used to indicate a type of the NDP multi-station control frame. The type of the NDP multi-station control frame includes at least one of an NDP multi-station block acknowledgement frame, an NDP multi-station request-to-send frame, and an NDP multi-station block acknowledgement request frame. The NDP multi-station request-to-send frame and the NDP multi-station block acknowledgement request frame are request frames. The NDP multi-station block acknowledgement frame is the first response frame or the second response frame.

In a specific case, when the multi-station control frame is the NDP multi-station block acknowledgement frame, the second parameter information associated with the second signal field includes a quantity of OFDM symbols of the second signal field, and a modulation and coding scheme of the second signal field; or the second parameter information associated with the second signal field includes a quantity of stations, and a modulation and coding scheme of the second signal field. The quantity of OFDM symbols of the second signal field has a function that is similar to that of the quantity of stations, and both the quantity of OFDM symbols and the quantity of stations are used to determine a length of the second signal field. The modulation and coding scheme of the second signal field is used to determine a data transmission rate. A reason why the length of the second signal field can be determined based on the quantity of stations is that each piece of station information includes a same quantity of bits. Therefore, when the quantity of stations is determined, the length of the second signal field may also be indirectly determined.

The control information that is in a one-to-one correspondence with each of the plurality of stations and that is in the second signal field may include acknowledgement information of each of the plurality of stations. The acknowledgement information of each station includes a station identifier and an acknowledgement/block acknowledgement indication, or the acknowledgement information of each station includes an acknowledgement/block acknowledgement identifier and an acknowledgement/block acknowledgement indication. The station identifier may be an association identifier or a partial association identifier of the station. The association identifier herein represents identity information of the station. For example, if the station is managed by an AP, the AP generates an internal management identifier for the station. The internal management identifier is used by the AP to identify the station. The acknowledgement/block acknowledgement identifier has a function that is the same as or similar to that of the station identifier, and is mainly used to determine a station that needs to receive (or send) the control frame. The acknowledgement/block acknowledgement identifier may include a combination of at least one bit of a scrambler initialization seed and at least one bit of an association identifier. For example, acknowledgement identifier bits include a combination of five low-order bits of the scrambler initialization seed and four low-order bits of the association identifier. Alternatively, block acknowledgement identifier bits include a combination of seven low-order bits of the scrambler initialization seed and five low-order bits of the association identifier. The association identifier may occupy one or more bits of the scrambler initialization seed, for example, seven low-order bits of the scrambler initialization seed. Alternatively, the acknowledgement/block acknowledgement identifier may include only one or more bits of the scrambler initialization seed. In a case, if a preset length of the acknowledgement/block acknowledgement identifier exceeds a quantity of bits occupied by the scrambler initialization seed, 0 or 1 may be added to an end of the scrambler initialization seed, to satisfy the preset length of the acknowledgement/block acknowledgement identifier. Alternatively, the acknowledgement/block acknowledgement identifier may include only one or more bits of the association identifier. Similarly, if a quantity of bits occupied by the association identifier is insufficient to satisfy the preset length of the acknowledgement/block acknowledgement identifier, 0 or 1 may also be added to an end of the association identifier, to obtain an acknowledgement/block acknowledgement identifier of the present length. The acknowledgement/block acknowledgement indication is used to determine whether the multi-station block acknowledgement frame is sent in a form of an acknowledgement frame or a block acknowledgement frame. When the acknowledgement information of each of the plurality of stations includes the block acknowledgement indication, the acknowledgement information of each of the plurality of stations further includes a start sequence value and a block acknowledgement bitmap. It is determined that each piece of acknowledgement information in block acknowledgement information is corresponding to one sequence number in the block acknowledgement bitmap. The start sequence value indicates a start sequence number, in the block acknowledgement bitmap, of first acknowledgement information in the block acknowledgement information. The block acknowledgement information herein is used to determine whether a MAC protocol data unit data frame sent by a transmit end is successfully sent.

In another case, when the multi-station control frame is the NDP multi-station request-to-send frame, the first signal field further includes transmission duration of the NDP multi-station request-to-send frame, and the second parameter information associated with the second signal field includes a length of the second signal field or a quantity of OFDM symbols.

The control information that is in a one-to-one correspondence with each of the plurality of stations and that is in the second signal field includes NDP request-to-send frame information of each of the plurality of stations. The NDP request-to-send frame information of each station includes one or a combination of the following information: a station identifier, a subchannel sequence number of a response frame of a clear-to-send frame, a coding type, a modulation and coding scheme, a dual-carrier modulation indication, and a flow allocation indication.

In another case, when the multi-station control frame is the NDP multi-station block acknowledgement request frame, the first signal field further includes transmission duration of the NDP multi-station block acknowledgement request frame, and the second parameter information associated with the second signal field includes a length of the second signal field or a quantity of OFDM symbols.

The control information that is in a one-to-one correspondence with each of the plurality of stations and that is in the second signal field includes: trigger information of each of the plurality of stations, a control field of the NDP multi-station block acknowledgement request frame, and an information field of the NDP multi-station block acknowledgement request frame. The trigger information of each of the plurality of stations includes one or a combination of the following information: a station identifier, a resource allocation indication, a coding type, a modulation and coding scheme, a dual-carrier modulation indication, and a flow allocation indication.

In the foregoing cases, the first signal field may be a high efficiency-signal field A in an 802.11ax packet, and the second signal field is a high efficiency-signal field B in the 802.11ax packet. The overloading subfield is a reserved bit in the high efficiency-signal field A, or is an unused value in a modulation and coding scheme included in the high efficiency-signal field A.

It should be understood that, in the foregoing descriptions, regardless of whether the overloading subfield carries the first identification information or the second identification information, if it is determined, based on the identification information, that the frame is neither an NDP multi-station control frame nor an NDP multi-station block acknowledgement frame, it indicates that the control frame is not an NDP multi-station control frame, but is a frame existing before overloading, for example, an 802.11ax packet.

It should be further understood that the foregoing NDP multi-station control fields may be considered as a frame structure designed based on control fields of an 802.11ax multi-station frame.

In another implementable solution, a new frame structure of an NDP multi-station control frame may be further designed based on an Internet of Things Wi-Fi protocol. The NDP multi-station control frame is an Internet of Things multi-station control frame, as shown in FIG. 9. The Internet of Things multi-station control frame may operate at a free-of-charge frequency band of 2.4 GHz, 5 GHz, or 1 GHz. Specifically, the Internet of Things multi-station control frame also includes a legacy preamble field and a new preamble field. The legacy preamble field herein and the legacy preamble field described above include same subfields, and the legacy preamble field needs to be used to transmit data at bandwidth at which a frequency is 20 MHz. The new preamble field is an Internet of Things preamble field. The first signal field is a first Internet of Things-field (Internet of things-signal field 1, IOT-SIG1 for short). The second signal field is a second Internet of Things-field (Internet of things-signal field 2, IOT-SIG2 for short). The Internet of Things preamble field further includes an Internet of Things-short training field (Internet of things-short training field, IOT-STF for short) and an Internet of Things-long training field (Internet of things-long training field, IOT-LTF for short). The Internet of Things preamble field may be used to transmit data at bandwidth less than 20 MHz, for example, 2 M, 4 M, 8 M, 16 M, 5 M, or 10 M, or may be used to transmit data at bandwidth of 20 MHz. In other words, bandwidth occupied by the legacy preamble field is greater than or equal to bandwidth occupied by the Internet of Things preamble field.

Although structures of the first signal field and the second signal field of the Internet of Things multi-station control frame are slightly different, content stored in subfields of the first signal field and the second signal field and functions of the subfields are the same as or similar to the foregoing descriptions. Details are not described herein again.

When the modules in the access point provided in this implementation of the present disclosure run, the access point performs steps in the method for transmitting a multi-station control frame that is provided in the implementations of the present disclosure. For operating details of the access point, refer to the method for transmitting a multi-station control frame that is provided in the implementations of the present disclosure.

According to the access point provided in this implementation, the sent or received multi-station control frame includes only the legacy preamble field and the new preamble field, and occupies much fewer bytes than an 802.11ax multi-station control frame. Therefore, duration in which the multi-station control frame occupies a channel during transmission can be reduced. An effect is more significant when data is transmitted by using a narrowband.

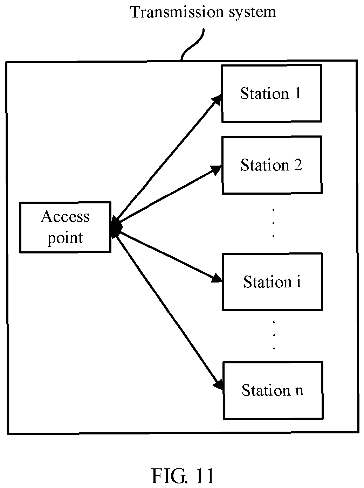

Corresponding to the method for transmitting a multi-station control frame or the access point mentioned in the foregoing descriptions, an implementation of the present disclosure further provides a transmission system. A schematic structural diagram of the transmission system is shown in FIG. 11. The transmission system includes the access point and the plurality of stations (for example, a station 1 to a station n shown in FIG. 11, where both i and n are positive integers greater than or equal to 1, and i is less than or equal to n) in the foregoing descriptions. For method steps performed by the transmission system, refer to the steps of the method for transmitting a multi-station control frame. Details are not described herein again.

A person skilled in the art may be further aware that units and algorithm steps of the examples described with reference to the implementations disclosed in this specification may be implemented by electronic hardware, computer software, or a combination thereof. To clearly describe interchangeability between the hardware and the software, the foregoing has generally described composition and steps of each example based on functions. Whether the functions are performed by hardware or software depends on particular applications and design constraints of the technical solutions. A person skilled in the art may use different methods to implement the described functions for each particular application, but it should not be considered that the implementation goes beyond the scope of the present disclosure.

Steps of methods or algorithms described in the implementations disclosed in this specification may be implemented by hardware, a software module executed by a processing module, or a combination thereof. The software module may be located in a random access memory (RAM), a memory, a read-only memory (ROM), an electrically programmable ROM, an electrically erasable programmable ROM, a register, a hard disk, a removable disk, a CD-ROM, or storage media in any other forms well-known in the art.
The scope of protection shall be defined by the appended claims.

## Claims

1. A method for transmitting a multi-station control frame, wherein the method is performed by a communication apparatus configured to operate as an access point, AP, in a transmission system, and the method comprises:
sending (210) a multi-station control frame to each of a plurality of stations, wherein
when the multi-station control frame is a request frame, the request frame is used to request each of the plurality of stations to send a first response frame corresponding to the multi-station control frame; and
receiving (220) the first response frame that is corresponding to the multi-station control frame and that is sent by each of the plurality of stations, wherein the multi-station control frame comprises a legacy preamble field and a new preamble field, and does not comprise a service field, a Media Access Control frame field, a trailer and a padding bit;
wherein the legacy preamble field comprises a legacy-short training field, L-STF, a legacy-long training field, L-LTF, a legacy-signal field, L-SIG and a repeated legacy-signal field, RL-SIG; and the new preamble field comprises a first signal field and a second signal field; the first signal field comprises first parameter information jointly owned by the plurality of stations, and second parameter information associated with the second signal field; and the second signal field comprises control information in a one-to-one correspondence with each of the plurality of stations;
wherein the first parameter information jointly owned by the plurality of stations comprises identification information of a transmit end that sends data to each of the plurality of stations; and wherein the second parameter information comprises: a quantity of OFDM symbols of the second signal field, and a modulation and coding scheme of the second signal field, or the second parameter information comprises: a quantity of stations, and a modulation and coding scheme of the second signal field; and
wherein the first signal field further comprises an overloading subfield, and the overloading subfield comprises first indication information that identifies the multi-station control frame as a null data packet NDP multi-station control frame, whereby when receiving an individual frame, a receive end identifies, based on the first identification information, a type of the individual frame as an NDP multi-station control frame type, or a frame type existing before overloading of a multi-station control frame;
or
wherein the first signal field further comprises an overloading subfield, and the overloading subfield comprises second indication information that identifies the multi-station control frame as an NDP multi-station block acknowledgement frame, whereby when receiving an individual frame, a receive end identifies, based on the second identification information, a type of the individual frame as an NDP multi-station block acknowledgement frame type, or a frame type existing before overloading of a multi-station control frame;
wherein a frame existing before overloading is an 802.11ax packet, wherein the 802.11ax packet has a multiple user physical layer convergence procedure protocol data unit structure; and
wherein the first signal field is a high efficiency-signal field A in the 802.11ax packet, and the second signal field is a high efficiency-signal field B in the 802.11ax packet; and
the overloading subfield is a reserved bit in the high efficiency-signal field A, or is an unused value in a modulation and coding scheme comprised in the high efficiency-signal field A.

2. A method for transmitting a multi-station control frame, wherein the method is performed by a communication apparatus configured to operate as an access point, AP, in a transmission system, and the method comprises:
sending (210) a multi-station control frame to each of a plurality of stations, wherein when the multi-station control frame is a second response frame, the second response frame is used to respond to data frames, management frames, or control frames that are transmitted by the plurality of stations; wherein the multi-station control frame comprises a legacy preamble field and a new preamble field, and does not comprise a service field, a Media Access Control frame field, a trailer and a padding bit;
wherein the legacy preamble field comprises a legacy-short training field, L-STF, a legacy-long training field, L-LTF, a legacy-signal field, L-SIG and a repeated legacy-signal field, RL-SIG; and the new preamble field comprises a first signal field and a second signal field; the first signal field comprises first parameter information jointly owned by the plurality of stations, and second parameter information associated with the second signal field; and the second signal field comprises control information in a one-to-one correspondence with each of the plurality of stations;
wherein the first parameter information jointly owned by the plurality of stations comprises identification information of a transmit end that sends data to each of the plurality of stations; and wherein the second parameter information comprises: a quantity of OFDM symbols of the second signal field, and a modulation and coding scheme of the second signal field, or the second parameter information comprises: a quantity of stations, and a modulation and coding scheme of the second signal field; and
wherein the first signal field further comprises an overloading subfield, and the overloading subfield comprises first indication information that identifies the multi-station control frame as a null data packet NDP multi-station control frame, whereby when receiving an individual frame, a receive end identifies, based on the first identification information, a type of the individual frame as an NDP multi-station control frame type, or a frame type existing before overloading of a multi-station control frame;
or
wherein the first signal field further comprises an overloading subfield, and the overloading subfield comprises second indication information that identifies the multi-station control frame as an NDP multi-station block acknowledgement frame, whereby when receiving an individual frame, a receive end identifies, based on the second identification information, a type of the individual frame as an NDP multi-station block acknowledgement frame type, or a frame type existing before overloading of a multi-station control frame;
wherein a frame existing before overloading is an 802.11ax packet, wherein the 802.11ax packet has a multiple user physical layer convergence procedure protocol data unit structure; and
wherein the first signal field is a high efficiency-signal field A in the 802.11ax packet, and the second signal field is a high efficiency-signal field B in the 802.11ax packet; and
the overloading subfield is a reserved bit in the high efficiency-signal field A, or is an unused value in a modulation and coding scheme comprised in the high efficiency-signal field A.

3. The method according to claim 1 or 2, wherein the first signal field further comprises a type indication field of the NDP multi-station control frame; the type indication field is used to indicate a type of the NDP multi-station control frame; the type of the NDP multi-station control frame comprises at least one of an NDP multi-station block acknowledgement frame, an NDP multi-station request-to-send frame, and an NDP multi-station block acknowledgement request frame; the NDP multi-station request-to-send frame and the NDP multi-station block acknowledgement request frame are request frames; and the NDP multi-station block acknowledgement frame is the first response frame or the second response frame.

4. The method according to any one of claims 1 to 3, wherein when the multi-station control frame is the NDP multi-station block acknowledgement frame, the control information in a one-to-one correspondence with each of the plurality of stations comprises:
acknowledgement information of each of the plurality of stations, wherein the acknowledgement information of each station comprises a station identifier and an acknowledgement/block acknowledgement indication; or
the acknowledgement information of each station comprises an acknowledgement/block acknowledgement identifier and an acknowledgement/block acknowledgement indication.

5. The method according to claim 4, wherein when the acknowledgement information of each station comprises the block acknowledgement indication, the acknowledgement information of each station further comprises a start sequence value and a block acknowledgement bitmap.

6. The method according to claim 5, wherein the acknowledgement/block acknowledgement identifier consists of a combination of at least one bit of a scrambler initialization seed and/or at least one bit of association identifier information of a station.

7. The method according to claim 3, wherein when the multi-station control frame is the NDP multi-station request-to-send frame, the first signal field further comprises transmission duration of the NDP multi-station request-to-send frame; and
the second parameter information associated with the second signal field comprises a length of the second signal field or a quantity of orthogonal frequency division multiplexing OFDM symbols.

8. A communication apparatus configured to operate as an access point in a transmission system, wherein the communication apparatus comprises:
a sending module (1001), configured to send a multi-station control frame to a plurality of stations, wherein
when the multi-station control frame is a request frame, the request frame is used to request each of the plurality of stations to send a first response frame corresponding to the multi-station control frame; and
a receiving module (1002), configured to receive the first response frame that is corresponding to the multi-station control frame and that is sent by each of the plurality of stations, wherein the multi-station control frame comprises a legacy preamble field and a new preamble field, and does not comprise a service field, a Media Access Control frame field, a trailer and a padding bit;
wherein the legacy preamble field comprises a legacy-short training field, L-STF, a legacy-long training field, L-LTF, a legacy-signal field, L-SIG and a repeated legacy-signal field, RL-SIG; and the new preamble field comprises a first signal field and a second signal field; the first signal field comprises first parameter information jointly owned by the plurality of stations, and second parameter information associated with the second signal field; and the second signal field comprises control information in a one-to-one correspondence with each of the plurality of stations;
wherein the first parameter information jointly owned by the plurality of stations comprises identification information of a transmit end that sends data to each of the plurality of stations; and wherein the second parameter information comprises: a quantity of OFDM symbols of the second signal field, and a modulation and coding scheme of the second signal field, or the second parameter information comprises: a quantity of stations, and a modulation and coding scheme of the second signal field; and
wherein the first signal field further comprises an overloading subfield, and the overloading subfield comprises first indication information that identifies the multi-station control frame as a null data packet NDP multi-station control frame, whereby when receiving an individual frame, a receive end identifies, based on the first identification information, a type of the individual frame as an NDP multi-station control frame type, or a frame type existing before overloading of a multi-station control frame;
or
wherein the first signal field further comprises an overloading subfield, and the overloading subfield comprises second indication information that identifies the multi-station control frame as an NDP multi-station block acknowledgement frame, whereby when receiving an individual frame, a receive end identifies, based on the second identification information, a type of the individual frame as an NDP multi-station block acknowledgement frame type, or a frame type existing before overloading of a multi-station control frame;
wherein a frame existing before overloading is an 802.11ax packet, wherein the 802.11ax packet has a multiple user physical layer convergence procedure protocol data unit structure; and
wherein the first signal field is a high efficiency-signal field A in the 802.11ax packet, and the second signal field is a high efficiency-signal field B in the 802.11ax packet; and
the overloading subfield is a reserved bit in the high efficiency-signal field A, or is an unused value in a modulation and coding scheme comprised in the high efficiency-signal field A.

9. A communication apparatus configured to operate as an access point in a transmission system, wherein the communication apparatus comprises:
a sending module (1001), configured to send a multi-station control frame to a plurality of stations, wherein when the multi-station control frame is a second response frame, the second response frame is used to respond to data frames, management frames, or control frames that are transmitted by the plurality of stations; wherein the multi-station control frame comprises a legacy preamble field and a new preamble field, and does not comprise a service field, a Media Access Control frame field, a trailer and a padding bit;
wherein the legacy preamble field comprises a legacy-short training field, L-STF, a legacy-long training field, L-LTF, a legacy-signal field, L-SIG and a repeated legacy-signal field, RL-SIG; and the new preamble field comprises a first signal field and a second signal field; the first signal field comprises first parameter information jointly owned by the plurality of stations, and second parameter information associated with the second signal field; and the second signal field comprises control information in a one-to-one correspondence with each of the plurality of stations;
wherein the first parameter information jointly owned by the plurality of stations comprises identification information of a transmit end that sends data to each of the plurality of stations; and wherein the second parameter information comprises: a quantity of OFDM symbols of the second signal field, and a modulation and coding scheme of the second signal field, or the second parameter information comprises: a quantity of stations, and a modulation and coding scheme of the second signal field; and
wherein the first signal field further comprises an overloading subfield, and the overloading subfield comprises first indication information that identifies the multi-station control frame as a null data packet NDP multi-station control frame, whereby when receiving an individual frame, a receive end identifies, based on the first identification information, a type of the individual frame as an NDP multi-station control frame type, or a frame type existing before overloading of a multi-station control frame;
or
wherein the first signal field further comprises an overloading subfield, and the overloading subfield comprises second indication information that identifies the multi-station control frame as an NDP multi-station block acknowledgement frame, whereby when receiving an individual frame, a receive end identifies, based on the second identification information, a type of the individual frame as an NDP multi-station block acknowledgement frame type, or a frame type existing before overloading of a multi-station control frame;
wherein a frame existing before overloading is an 802.11ax packet, wherein the 802.11ax packet has a multiple user physical layer convergence procedure protocol data unit structure; and
wherein the first signal field is a high efficiency-signal field A in the 802.11ax packet, and the second signal field is a high efficiency-signal field B in the 802.11ax packet; and
the overloading subfield is a reserved bit in the high efficiency-signal field A, or is an unused value in a modulation and coding scheme comprised in the high efficiency-signal field A.

10. The communication apparatus according to claim 8 or 9, wherein the first signal field further comprises a type indication field of the NDP multi-station control frame; the type indication field is used to indicate a type of the NDP multi-station control frame; the type of the NDP multi-station control frame comprises at least one of an NDP multi-station block acknowledgement frame, an NDP multi-station request-to-send frame, and an NDP multi-station block acknowledgement request frame; the NDP multi-station request-to-send frame and the NDP multi-station block acknowledgement request frame are request frames; and the NDP multi-station block acknowledgement frame is the first response frame or the second response frame.

## Patentansprüche

1. Verfahren zur Übertragung eines Mehrstations-Steuerungsrahmens, wobei das Verfahren von einer Kommunikationsvorrichtung durchgeführt wird, die so konfiguriert ist, dass sie als Zugangspunkt, AP, in einem Übertragungssystem fungiert, und das Verfahren Folgendes umfasst:
Senden (210) eines Mehrstations-Steuerungsrahmens an jede einer Mehrzahl von Stationen, wobei, wenn der Mehrstations-Steuerungsrahmen ein Anforderungsrahmen ist, der Anforderungsrahmen verwendet wird, um von jeder der Mehrzahl von Stationen anzufordern, einen ersten Antwortrahmen zu senden, der dem Mehrstations-Steuerungsrahmen entspricht; und
Empfangen (220) des ersten Antwortrahmens, der dem Mehrstations-Steuerungsrahmen entspricht und der von jeder der Mehrzahl von Stationen gesendet wird, wobei der Mehrstations-Steuerungsrahmen ein "Legacy"-Präambelfeld und ein neues Präambelfeld umfasst, aber kein Dienstfeld, kein Medienzugriffssteuerungs-Rahmenfeld, keinen Trailer und kein Füllbit umfasst;
wobei das Legacy-Präambelfeld ein "Legacy"-Kurztrainingsfeld, L-STF, ein "Legacy"-Langtrainingsfeld, L-LTF, ein "Legacy"-Signalfeld, L-SIG, und ein wiederholtes "Legacy"-Signalfeld, RL-SIG, umfasst; und das neue Präambelfeld ein erstes Signalfeld und ein zweites Signalfeld umfasst; das erste Signalfeld erste Parameterinformationen, die der Mehrzahl von Stationen gemeinsam gehören, und zweite Parameterinformationen umfasst, die mit dem zweiten Signalfeld assoziiert sind; und das zweite Signalfeld Steuerinformationen in einer Eins-zu-eins-Entsprechung mit jeder der Mehrzahl von Stationen umfasst;
wobei die ersten Parameterinformationen, die der Mehrzahl von Stationen gemeinsam gehören, Identifikationsinformationen eines Sendeendes umfassen, das Daten an jede der Mehrzahl von Stationen sendet; und wobei die zweiten Parameterinformationen Folgendes umfassen: eine Menge von OFDM-Symbolen des zweiten Signalfeldes und ein Modulations- und Codierungsschema des zweiten Signalfeldes, oder die zweiten Parameterinformationen Folgendes umfassen: eine Menge von Stationen und ein Modulations- und Codierungsschema des zweiten Signalfeldes; und
wobei das erste Signalfeld ferner ein Überlastungsteilfeld umfasst und das Überlastungsteilfeld erste Anzeigeinformationen umfasst, die den Mehrstations-Steuerungsrahmen als einen Null-Daten-Paket-Mehrstations-Steuerungsrahmen, NDP-Mehrstations-Steuerungsrahmen, identifizieren, wobei bei Empfang eines einzelnen Rahmens ein Empfangsende einen Typ des einzelnen Rahmens basierend auf den ersten Identifikationsinformationen als einen NDP-Mehrstations-Steuerungsrahmentyp oder einen Rahmentyp identifiziert, der vor der Überlastung eines Mehrstations-Steuerungsrahmens existierte;
oder
wobei das erste Signalfeld ferner ein Überlastungsteilfeld umfasst und das Überlastungsteilfeld zweite Anzeigeinformationen umfasst, die den Mehrstations-Steuerungsrahmen als einen NDP-Mehrstations-Blockbestätigungsrahmen identifizieren, wobei bei Empfang eines einzelnen Rahmens ein Empfangsende einen Typ des einzelnen Rahmens basierend auf den zweiten Identifikationsinformationen als einen NDP-Mehrstations-Blockbestätigungsrahmentyp oder einen Rahmentyp identifiziert, der vor der Überlastung eines Mehrstations-Steuerungsrahmens existierte;
wobei ein Rahmen, der vor der Überlastung existiert, ein 802.11ax-Paket ist, wobei das 802.11ax-Paket eine Struktur einer Protokolldateneinheit einer Konvergenzprozedur der physikalischen Schicht für mehrere Benutzer aufweist; und
wobei das erste Signalfeld ein Hochleistungssignalfeld A in dem 802.11ax-Paket ist und das zweite Signalfeld ein Hochleistungssignalfeld B in dem 802.11ax-Paket ist; und
das Überlastungsteilfeld ein reserviertes Bit in dem Hochleistungssignalfeld A ist oder ein ungenutzter Wert in einem Modulations- und Codierungsschema ist, das in dem Hochleistungssignalfeld A umfasst ist.

2. Verfahren zur Übertragung eines Mehrstations-Steuerungsrahmens, wobei das Verfahren von einer Kommunikationsvorrichtung durchgeführt wird, die so konfiguriert ist, dass sie als Zugangspunkt, AP, in einem Übertragungssystem fungiert, und das Verfahren Folgendes umfasst:
Senden (210) eines Mehrstations-Steuerungsrahmens an jede einer Mehrzahl von Stationen, wobei, wenn der Mehrstations-Steuerungsrahmen ein zweiter Antwortrahmen ist, der zweite Antwortrahmen verwendet wird, um auf Datenrahmen, Verwaltungsrahmen oder Steuerungsrahmen zu antworten, die von der Mehrzahl von Stationen übertragen werden; wobei der Mehrstations-Steuerungsrahmen ein "Legacy"-Präambelfeld und ein neues Präambelfeld umfasst, aber kein Dienstfeld, kein Medienzugriffssteuerungs-Rahmenfeld, keinen Trailer und kein Füllbit umfasst;
wobei das Legacy-Präambelfeld ein "Legacy"-Kurztrainingsfeld, L-STF, ein "Legacy"-Langtrainingsfeld, L-LTF, ein "Legacy"-Signalfeld, L-SIG, und ein wiederholtes "Legacy"-Signalfeld, RL-SIG, umfasst; und das neue Präambelfeld ein erstes Signalfeld und ein zweites Signalfeld umfasst; das erste Signalfeld erste Parameterinformationen, die der Mehrzahl von Stationen gemeinsam gehören, und zweite Parameterinformationen umfasst, die mit dem zweiten Signalfeld assoziiert sind; und das zweite Signalfeld Steuerinformationen in einer Eins-zu-eins-Entsprechung mit jeder der Mehrzahl von Stationen umfasst;
wobei die ersten Parameterinformationen, die der Mehrzahl von Stationen gemeinsam gehören, Identifikationsinformationen eines Sendeendes umfassen, das Daten an jede der Mehrzahl von Stationen sendet; und wobei die zweiten Parameterinformationen Folgendes umfassen: eine Menge von OFDM-Symbolen des zweiten Signalfeldes und ein Modulations- und Codierungsschema des zweiten Signalfeldes, oder die zweiten Parameterinformationen Folgendes umfassen: eine Menge von Stationen und ein Modulations- und Codierungsschema des zweiten Signalfeldes; und
wobei das erste Signalfeld ferner ein Überlastungsteilfeld umfasst und das Überlastungsteilfeld erste Anzeigeinformationen umfasst, die den Mehrstations-Steuerungsrahmen als einen Null-Daten-Paket-Mehrstations-Steuerungsrahmen, NDP-Mehrstations-Steuerungsrahmen, identifizieren, wobei bei Empfang eines einzelnen Rahmens ein Empfangsende einen Typ des einzelnen Rahmens basierend auf den ersten Identifikationsinformationen als einen NDP-Mehrstations-Steuerungsrahmentyp oder einen Rahmentyp identifiziert, der vor der Überlastung eines Mehrstations-Steuerungsrahmens existierte;
oder
wobei das erste Signalfeld ferner ein Überlastungsteilfeld umfasst und das Überlastungsteilfeld zweite Anzeigeinformationen umfasst, die den Mehrstations-Steuerungsrahmen als einen NDP-Mehrstations-Blockbestätigungsrahmen identifizieren, wobei bei Empfang eines einzelnen Rahmens ein Empfangsende einen Typ des einzelnen Rahmens basierend auf den zweiten Identifikationsinformationen als einen NDP-Mehrstations-Blockbestätigungsrahmentyp oder einen Rahmentyp identifiziert, der vor der Überlastung eines Mehrstations-Steuerungsrahmens existierte;
wobei ein Rahmen, der vor der Überlastung existiert, ein 802.11ax-Paket ist, wobei das 802.11ax-Paket eine Struktur einer Protokolldateneinheit einer Konvergenzprozedur der physikalischen Schicht für mehrere Benutzer aufweist; und
wobei das erste Signalfeld ein Hochleistungssignalfeld A in dem 802.11ax-Paket ist und das zweite Signalfeld ein Hochleistungssignalfeld B in dem 802.11ax-Paket ist; und
das Überlastungsteilfeld ein reserviertes Bit in dem Hochleistungssignalfeld A ist oder ein ungenutzter Wert in einem Modulations- und Codierungsschema ist, das in dem Hochleistungssignalfeld A umfasst ist.

3. Verfahren nach Anspruch 1 oder 2, wobei das erste Signalfeld ferner ein Typanzeigefeld des NDP-Mehrstations-Steuerungsrahmens umfasst; das Typanzeigefeld verwendet wird, um einen Typ des NDP-Mehrstations-Steuerungsrahmens anzuzeigen; der Typ des NDP-Mehrstations-Steuerungsrahmens mindestens einen von einem NDP-Mehrstations-Blockbestätigungsrahmen, einem NDP-Mehrstations-Sendeanforderungsrahmen und einem NDP-Mehrstations-Blockbestätigungsanforderungsrahmen umfasst; der NDP-Mehrstations-Sendeanforderungsrahmen und der NDP-Mehrstations-Blockbestätigungsanforderungsrahmen Anforderungsrahmen sind; und der NDP-Mehrstations-Blockbestätigungsrahmen der erste Antwortrahmen oder der zweite Antwortrahmen ist.

4. Verfahren nach einem der Ansprüche 1 bis 3, wobei, wenn der Mehrstations-Steuerungsrahmen der NDP-Mehrstations-Blockbestätigungsrahmen ist, die Steuerinformation in einer Eins-zu-eins-Entsprechung mit jeder der Mehrzahl von Stationen Folgendes umfassen:
Bestätigungsinformationen jeder der Mehrzahl von Stationen, wobei die Bestätigungsinformationen jeder Station eine Stationskennung und eine Bestätigungs-Blockbestätigungsanzeige umfassen; oder
die Bestätigungsinformationen jeder Station eine Bestätigungs-/Blockbestätigungskennung und eine Bestätigungs-/Blockbestätigungsanzeige umfassen.

5. Verfahren nach Anspruch 4, wobei, wenn die Bestätigungsinformationen jeder Station die Blockbestätigungsanzeige umfassen, die Bestätigungsinformationen jeder Station ferner einen Startfolgewert und eine Blockbestätigungs-Bitmap umfassen.

6. Verfahren nach Anspruch 5, wobei die Bestätigungs-/Blockbestätigungskennung aus einer Kombination aus mindestens einem Bit eines Verwürfeler-Initialisierungsstartwerts und/oder mindestens einem Bit von Zuordnungskennungsinformationen einer Station besteht.

7. Verfahren nach Anspruch 3, wobei, wenn der Mehrstations-Steuerungsrahmen der NDP-Mehrstations-Sendeanforderungsrahmen ist, das erste Signalfeld ferner eine Übertragungsdauer des NDP-Mehrstations-Sendeanforderungsrahmens Folgendes umfasst; und
die zweiten Parameterinformationen, die mit dem zweiten Signalfeld assoziiert sind, eine Länge des zweiten Signalfeldes oder eine Menge von orthogonalen Frequenzmultiplexsymbolen, OFDM-Symbolen, umfassen.

8. Kommunikationsvorrichtung, die so konfiguriert ist, dass sie als ein Zugangspunkt in einem Übertragungssystem fungiert, wobei die Kommunikationsvorrichtung Folgendes umfasst:
ein Sendemodul (1001), das zum Senden eines Mehrstations-Steuerungsrahmens an eine Mehrzahl von Stationen konfiguriert ist, wobei, wenn der Mehrstationssteuerahmen ein Anforderungsrahmen ist, der Anforderungsrahmen verwendet wird, um von jeder der Mehrzahl von Stationen anzufordern, einen ersten Antwortrahmen zu senden, der dem Mehrstations-Steuerungsrahmen entspricht; und
ein Empfangsmodul (1002), das zum Empfangen des ersten Antwortrahmens konfiguriert ist, der dem Mehrstations-Steuerungsrahmen entspricht und der von jeder der Mehrzahl von Stationen gesendet wird, wobei der Mehrstations-Steuerungsrahmen ein "Legacy"-Präambelfeld und ein neues Präambelfeld umfasst, aber kein Dienstfeld, kein Medienzugriffssteuerungs-Rahmenfeld, keinen Trailer und kein Füllbit umfasst;
wobei das Legacy-Präambelfeld ein "Legacy"-Kurztrainingsfeld, L-STF, ein "Legacy"-Langtrainingsfeld, L-LTF, ein "Legacy"-Signalfeld, L-SIG, und ein wiederholtes "Legacy"-Signalfeld, RL-SIG, umfasst; und das neue Präambelfeld ein erstes Signalfeld und ein zweites Signalfeld umfasst; das erste Signalfeld erste Parameterinformationen, die der Mehrzahl von Stationen gemeinsam gehören, und zweite Parameterinformationen umfasst, die mit dem zweiten Signalfeld assoziiert sind; und das zweite Signalfeld Steuerinformationen in einer Eins-zu-eins-Entsprechung mit jeder der Mehrzahl von Stationen umfasst;
wobei die ersten Parameterinformationen, die der Mehrzahl von Stationen gemeinsam gehören, Identifikationsinformationen eines Sendeendes umfassen, das Daten an jede der Mehrzahl von Stationen sendet; und wobei die zweiten Parameterinformationen Folgendes umfassen: eine Menge von OFDM-Symbolen des zweiten Signalfeldes und ein Modulations- und Codierungsschema des zweiten Signalfeldes, oder die zweiten Parameterinformationen Folgendes umfassen: eine Menge von Stationen und ein Modulations- und Codierungsschema des zweiten Signalfeldes; und
wobei das erste Signalfeld ferner ein Überlastungsteilfeld umfasst und das Überlastungsteilfeld erste Anzeigeinformationen umfasst, die den Mehrstations-Steuerungsrahmen als einen Null-Daten-Paket-Mehrstations-Steuerungsrahmen, NDP-Mehrstations-Steuerungsrahmen, identifizieren, wobei bei Empfang eines einzelnen Rahmens ein Empfangsende einen Typ des einzelnen Rahmens basierend auf den ersten Identifikationsinformationen als einen NDP-Mehrstations-Steuerungsrahmentyp oder einen Rahmentyp identifiziert, der vor der Überlastung eines Mehrstations-Steuerungsrahmens existierte; oder
wobei das erste Signalfeld ferner ein Überlastungsteilfeld umfasst und das Überlastungsteilfeld zweite Anzeigeinformationen umfasst, die den Mehrstations-Steuerungsrahmen als einen NDP-Mehrstations-Blockbestätigungsrahmen identifizieren, wobei bei Empfang eines einzelnen Rahmens ein Empfangsende einen Typ des einzelnen Rahmens basierend auf den zweiten Identifikationsinformationen als einen NDP-Mehrstations-Blockbestätigungsrahmentyp oder einen Rahmentyp identifiziert, der vor der Überlastung eines Mehrstations-Steuerungsrahmens existierte;
wobei ein Rahmen, der vor der Überlastung existiert, ein 802.11ax-Paket ist, wobei das 802.11ax-Paket eine Struktur einer Protokolldateneinheit einer Konvergenzprozedur der physikalischen Schicht für mehrere Benutzer aufweist; und
wobei das erste Signalfeld ein Hochleistungssignalfeld A in dem 802.11ax-Paket ist und das zweite Signalfeld ein Hochleistungssignalfeld B in dem 802.11ax-Paket ist;
und
das Überlastungsteilfeld ein reserviertes Bit in dem Hochleistungssignalfeld A ist oder ein ungenutzter Wert in einem Modulations- und Codierungsschema ist, das in dem Hochleistungssignalfeld A umfasst ist.

9. Kommunikationsvorrichtung, die so konfiguriert ist, dass sie als ein Zugangspunkt in einem Übertragungssystem fungiert, wobei die Kommunikationsvorrichtung Folgendes umfasst:
ein Sendemodul (1001), das zum Senden eines Mehrstations-Steuerungsrahmens an eine Mehrzahl von Stationen konfiguriert ist, wobei, wenn der Mehrstations-Steuerungsrahmen ein zweiter Antwortrahmen ist, der zweite Antwortrahmen verwendet wird, um auf Datenrahmen, Verwaltungsrahmen oder Steuerungsrahmen zu antworten, die von der Mehrzahl von Stationen übertragen werden; wobei der Mehrstations-Steuerungsrahmen ein "Legacy"-Präambelfeld und ein neues Präambelfeld umfasst, aber kein Dienstfeld, kein Medienzugriffssteuerungs-Rahmenfeld, keinen Trailer und kein Füllbit umfasst;
wobei das Legacy-Präambelfeld ein "Legacy"-Kurztrainingsfeld, L-STF, ein "Legacy"-Langtrainingsfeld, L-LTF, ein "Legacy"-Signalfeld, L-SIG, und ein wiederholtes "Legacy"-Signalfeld, RL-SIG, umfasst; und das neue Präambelfeld ein erstes Signalfeld und ein zweites Signalfeld umfasst; das erste Signalfeld erste Parameterinformationen, die der Mehrzahl von Stationen gemeinsam gehören, und zweite Parameterinformationen umfasst, die mit dem zweiten Signalfeld assoziiert sind; und das zweite Signalfeld Steuerinformationen in einer Eins-zu-eins-Entsprechung mit jeder der Mehrzahl von Stationen umfasst;
wobei die ersten Parameterinformationen, die der Mehrzahl von Stationen gemeinsam gehören, Identifikationsinformationen eines Sendeendes umfassen, das Daten an jede der Mehrzahl von Stationen sendet; und wobei die zweiten Parameterinformationen Folgendes umfassen: eine Menge von OFDM-Symbolen des zweiten Signalfeldes und ein Modulations- und Codierungsschema des zweiten Signalfeldes, oder die zweiten Parameterinformationen Folgendes umfassen: eine Menge von Stationen und ein Modulations- und Codierungsschema des zweiten Signalfeldes; und
wobei das erste Signalfeld ferner ein Überlastungsteilfeld umfasst und das Überlastungsteilfeld erste Anzeigeinformationen umfasst, die den Mehrstations-Steuerungsrahmen als einen Null-Daten-Paket-Mehrstations-Steuerungsrahmen, NDP-Mehrstations-Steuerungsrahmen, identifizieren, wobei bei Empfang eines einzelnen Rahmens ein Empfangsende einen Typ des einzelnen Rahmens basierend auf den ersten Identifikationsinformationen als einen NDP-Mehrstations-Steuerungsrahmentyp oder einen Rahmentyp identifiziert, der vor der Überlastung eines Mehrstations-Steuerungsrahmens existierte;
oder
wobei das erste Signalfeld ferner ein Überlastungsteilfeld umfasst und das Überlastungsteilfeld zweite Anzeigeinformationen umfasst, die den Mehrstations-Steuerungsrahmen als einen NDP-Mehrstations-Blockbestätigungsrahmen identifizieren, wobei bei Empfang eines einzelnen Rahmens ein Empfangsende einen Typ des einzelnen Rahmens basierend auf den zweiten Identifikationsinformationen als einen NDP-Mehrstations-Blockbestätigungsrahmentyp oder einen Rahmentyp identifiziert, der vor der Überlastung eines Mehrstations-Steuerungsrahmens existierte;
wobei ein Rahmen, der vor der Überlastung existiert, ein 802.11ax-Paket ist, wobei das 802.11ax-Paket eine Struktur einer Protokolldateneinheit einer Konvergenzprozedur der physikalischen Schicht für mehrere Benutzer aufweist; und
wobei das erste Signalfeld ein Hochleistungssignalfeld A in dem 802.11ax-Paket ist und das zweite Signalfeld ein Hochleistungssignalfeld B in dem 802.11ax-Paket ist; und
das Überlastungsteilfeld ein reserviertes Bit in dem Hochleistungssignalfeld A ist oder ein ungenutzter Wert in einem Modulations- und Codierungsschema ist, das in dem Hochleistungssignalfeld A umfasst ist.

10. Kommunikationsvorrichtung nach Anspruch 8 oder 9, wobei das erste Signalfeld ferner ein Typanzeigefeld des NDP-Mehrstations-Steuerungsrahmens umfasst; das Typanzeigefeld verwendet wird, um einen Typ des NDP-Mehrstations-Steuerungsrahmens anzuzeigen; der Typ des NDP-Mehrstations-Steuerungsrahmens mindestens einen von einem NDP-Mehrstations-Blockbestätigungsrahmen, einem NDP-Mehrstations-Sendeanforderungsrahmen und einem NDP-Mehrstations-Blockbestätigungsanforderungsrahmen umfasst; der NDP-Mehrstations-Sendeanforderungsrahmen und der NDP-Mehrstations-Blockbestätigungsanforderungsrahmen Anforderungsrahmen sind; und der NDP-Mehrstations-Blockbestätigungsrahmen der erste Antwortrahmen oder der zweite Antwortrahmen ist.

## Revendications

1. Procédé pour transmettre une trame de commande multistation, le procédé étant effectué par un appareil de communication configuré pour fonctionner comme point d'accès, AP, dans un système de transmission, et le procédé comprenant les étapes consistant à :
envoyer (210) une trame de commande multistation à chaque station d'une pluralité de stations, dans lequel
lorsque la trame de commande multistation est une trame de demande, la trame de demande est utilisée pour demander à chaque station de la pluralité de stations d'envoyer une première trame de réponse correspondant à la trame de commande multistation ; et
recevoir (220) la première trame de réponse qui correspond à la trame de commande multistation et qui est envoyée par chaque station de la pluralité de stations, la trame de commande multistation comprenant un champ de préambule classique et un champ de préambule nouveau, et ne comprenant pas de champ de service, de champ de trame de commande d'accès au support, de queue et de bit de remplissage ;
dans lequel le champ de préambule classique comprend un champ d'apprentissage court classique, L-STF, un champ d'apprentissage long classique, L-LTF, un champ de signal classique, L-SIG, et un champ de signal classique répété, RL-SIG ; et le champ de préambule nouveau comprend un premier champ de signal et un deuxième champ de signal ; le premier champ de signal comprend des premières informations de paramètres possédées conjointement par la pluralité de stations, et des deuxièmes informations de paramètres associées au deuxième champ de signal ; et le deuxième champ de signal comprend des informations de commande en correspondance biunivoque avec chaque station de la pluralité de stations ;
dans lequel les premières informations de paramètres possédées conjointement par la pluralité de stations comprennent des informations d'identification d'une extrémité de transmission qui envoie des données à chaque station de la pluralité de stations ; et
dans lequel les deuxièmes informations de paramètres comprennent : une quantité de symboles OFDM du deuxième champ de signal, et un schéma de modulation et de codage du deuxième champ de signal, ou les deuxièmes informations de paramètres comprennent : une quantité de stations, et un schéma de modulation et de codage du deuxième champ de signal ; et
dans lequel le premier champ de signal comprend également un sous-champ de surcharge, et le sous-champ de surcharge comprend des premières informations d'indication qui identifient la trame de commande multistation comme étant une trame de commande multistation à paquets de données nulles NDP, moyennant quoi, lors de la réception d'une trame individuelle, une extrémité de réception identifie, sur la base des premières informations d'identification, un type de la trame individuelle comme étant un type de trame de commande multistation NDP, ou un type de trame existant avant la surcharge d'une trame de commande multistation ;
ou
dans lequel le premier champ de signal comprend également un sous-champ de surcharge, et le sous-champ de surcharge comprend des deuxièmes informations d'indication qui identifient la trame de commande multistation comme étant une trame d'acquittement de bloc multistation NDP, moyennant quoi, lors de la réception d'une trame individuelle, une extrémité de réception identifie, sur la base des deuxièmes informations d'identification, un type de la trame individuelle comme étant un type de trame d'acquittement de bloc multistation NDP, ou un type de trame existant avant la surcharge d'une trame de commande multistation ;
dans lequel une trame existant avant la surcharge est un paquet 802.11ax, le paquet 802.11ax ayant une structure d'unité de données de protocole de procédure de convergence de couche physique à utilisateurs multiples ; et
dans lequel le premier champ de signal est un champ de signal à haute efficacité A dans le paquet 802.11ax, et le deuxième champ de signal est un champ de signal à haute efficacité B dans le paquet 802.11ax ; et
le sous-champ de surcharge est un bit réservé du champ de signal à haute efficacité A, ou est une valeur inutilisée dans un schéma de modulation et de codage compris dans le champ de signal à haute efficacité A.

2. Procédé pour transmettre une trame de commande multistation, le procédé étant effectué par un appareil de communication configuré pour fonctionner comme point d'accès, AP, dans un système de transmission, et le procédé comprenant l'étape consistant à :
envoyer (210) une trame de commande multistation à chaque station d'une pluralité de stations, dans lequel, lorsque la trame de commande multistation est une deuxième trame de réponse, la deuxième trame de réponse est utilisée pour répondre aux trames de données, aux trames de gestion ou aux trames de commande qui sont transmises par la pluralité de stations ; dans lequel la trame de commande multistation comprend un champ de préambule classique et un champ de préambule nouveau, et ne comprend pas de champ de service, de champ de trame de commande d'accès au support, de queue et de bit de remplissage ;
dans lequel le champ de préambule classique comprend un champ d'apprentissage court classique, L-STF, un champ d'apprentissage long classique, L-LTF, un champ de signal classique, L-SIG, et un champ de signal classique répété, RL-SIG ; et le champ de préambule nouveau comprend un premier champ de signal et un deuxième champ de signal ; le premier champ de signal comprend des premières informations de paramètres possédées conjointement par la pluralité de stations, et des deuxièmes informations de paramètres associées au deuxième champ de signal ; et le deuxième champ de signal comprend des informations de commande en correspondance biunivoque avec chaque station de la pluralité de stations ;
dans lequel les premières informations de paramètres possédées conjointement par la pluralité de stations comprennent des informations d'identification d'une extrémité de transmission qui envoie des données à chaque station de la pluralité de stations ; et
dans lequel les deuxièmes informations de paramètres comprennent : une quantité de symboles OFDM du deuxième champ de signal, et un schéma de modulation et de codage du deuxième champ de signal, ou les deuxièmes informations de paramètres comprennent : une quantité de stations, et un schéma de modulation et de codage du deuxième champ de signal ; et
dans lequel le premier champ de signal comprend également un sous-champ de surcharge, et le sous-champ de surcharge comprend des premières informations d'indication qui identifient la trame de commande multistation comme étant une trame de commande multistation à paquets de données nulles NDP, moyennant quoi, lors de la réception d'une trame individuelle, une extrémité de réception identifie, sur la base des premières informations d'identification, un type de la trame individuelle comme étant un type de trame de commande multistation NDP, ou un type de trame existant avant la surcharge d'une trame de commande multistation ;
ou
dans lequel le premier champ de signal comprend également un sous-champ de surcharge, et le sous-champ de surcharge comprend des deuxièmes informations d'indication qui identifient la trame de commande multistation comme étant une trame d'acquittement de bloc multistation NDP, moyennant quoi, lors de la réception d'une trame individuelle, une extrémité de réception identifie, sur la base des deuxièmes informations d'identification, un type de la trame individuelle comme étant un type de trame d'acquittement de bloc multistation NDP, ou un type de trame existant avant la surcharge d'une trame de commande multistation ;
dans lequel une trame existant avant la surcharge est un paquet 802.11ax, le paquet 802.11ax ayant une structure d'unité de données de protocole de procédure de convergence de couche physique à utilisateurs multiples ; et
dans lequel le premier champ de signal est un champ de signal à haute efficacité A dans le paquet 802.11ax, et le deuxième champ de signal est un champ de signal à haute efficacité B dans le paquet 802.11ax ; et
le sous-champ de surcharge est un bit réservé du champ de signal à haute efficacité A, ou est une valeur inutilisée dans un schéma de modulation et de codage compris dans le champ de signal à haute efficacité A.

3. Procédé selon la revendication 1 ou 2, dans lequel le premier champ de signal comprend également un champ d'indication de type de la trame de commande multistation NDP ; le champ d'indication de type est utilisé pour indiquer un type de la trame de commande multistation NDP ; le type de la trame de commande multistation NDP comprend au moins une trame parmi une trame d'acquittement de bloc multistation NDP, une trame de demande d'envoi multistation NDP et une trame de demande d'acquittement de bloc multistation NDP ; la trame de demande d'envoi multistation NDP et la trame de demande d'acquittement de bloc multistation NDP sont des trames de demande ; et la trame d'acquittement de bloc multistation NDP est la première trame de réponse ou la deuxième trame de réponse.

4. Procédé selon l'une quelconque des revendications 1 à 3, dans lequel, lorsque la trame de commande multistation est la trame d'acquittement de bloc multistation NDP, les informations de commande en correspondance biunivoque avec chaque station de la pluralité de stations comprennent :
des informations d'acquittement de chaque station de la pluralité de stations, les informations d'acquittement de chaque station comprenant un identifiant de station et une indication d'acquittement/acquittement de bloc ; ou
les informations d'acquittement de chaque station comprennent un identifiant d'acquittement/acquittement de bloc et une indication d'acquittement/acquittement de bloc.

5. Procédé selon la revendication 4, dans lequel, lorsque les informations d'acquittement de chaque station comprennent l'indication d'acquittement de bloc, les informations d'acquittement de chaque station comprennent également une valeur de séquence de début et une table de bits d'acquittement de bloc.

6. Procédé selon la revendication 5, dans lequel l'identifiant d'acquittement/acquittement de bloc consiste en une combinaison d'au moins un bit d'une graine d'initialisation d'embrouilleur et/ou au moins un bit d'informations d'identifiant d'association d'une station.

7. Procédé selon la revendication 3, dans lequel, lorsque la trame de commande multistation est la trame de demande d'envoi multistation NDP, le premier champ de signal comprend également une durée de transmission de la trame de demande d'envoi multistation NDP ; et
les deuxièmes informations de paramètres associées au deuxième champ de signal comprennent une longueur du deuxième champ de signal ou une quantité de symboles de multiplexage par répartition orthogonale de la fréquence OFDM.

8. Appareil de communication configuré pour fonctionner comme point d'accès dans un système de transmission, l'appareil de communication comprenant :
un module d'envoi (1001), configuré pour envoyer une trame de commande multistation à une pluralité de stations, dans lequel
lorsque la trame de commande multistation est une trame de demande, la trame de demande est utilisée pour demander à chaque station de la pluralité de stations d'envoyer une première trame de réponse correspondant à la trame de commande multistation ; et
un module de réception (1002), configuré pour recevoir la première trame de réponse qui correspond à la trame de commande multistation et qui est envoyée par chaque station de la pluralité de stations, la trame de commande multistation comprenant un champ de préambule classique et un champ de préambule nouveau, et ne comprenant pas de champ de service, de champ de trame de commande d'accès au support, de queue et de bit de remplissage ;
dans lequel le champ de préambule classique comprend un champ d'apprentissage court classique, L-STF, un champ d'apprentissage long classique, L-LTF, un champ de signal classique, L-SIG, et un champ de signal classique répété, RL-SIG ; et le champ de préambule nouveau comprend un premier champ de signal et un deuxième champ de signal ; le premier champ de signal comprend des premières informations de paramètres possédées conjointement par la pluralité de stations, et des deuxièmes informations de paramètres associées au deuxième champ de signal ; et le deuxième champ de signal comprend des informations de commande en correspondance biunivoque avec chaque station de la pluralité de stations ;
dans lequel les premières informations de paramètres possédées conjointement par la pluralité de stations comprennent des informations d'identification d'une extrémité de transmission qui envoie des données à chaque station de la pluralité de stations ; et
dans lequel les deuxièmes informations de paramètres comprennent : une quantité de symboles OFDM du deuxième champ de signal, et un schéma de modulation et de codage du deuxième champ de signal, ou les deuxièmes informations de paramètres comprennent : une quantité de stations, et un schéma de modulation et de codage du deuxième champ de signal ; et
dans lequel le premier champ de signal comprend également un sous-champ de surcharge, et le sous-champ de surcharge comprend des premières informations d'indication qui identifient la trame de commande multistation comme étant une trame de commande multistation à paquets de données nulles NDP, moyennant quoi,
lors de la réception d'une trame individuelle, une extrémité de réception identifie, sur la base des premières informations d'identification, un type de la trame individuelle comme étant un type de trame de commande multistation NDP, ou un type de trame existant avant la surcharge d'une trame de commande multistation ;
ou
dans lequel le premier champ de signal comprend également un sous-champ de surcharge, et le sous-champ de surcharge comprend des deuxièmes informations d'indication qui identifient la trame de commande multistation comme étant une trame d'acquittement de bloc multistation NDP, moyennant quoi, lors de la réception d'une trame individuelle, une extrémité de réception identifie, sur la base des deuxièmes informations d'identification, un type de la trame individuelle comme étant un type de trame d'acquittement de bloc multistation NDP, ou un type de trame existant avant la surcharge d'une trame de commande multistation ;
dans lequel une trame existant avant la surcharge est un paquet 802.11ax, le paquet 802.11ax ayant une structure d'unité de données de protocole de procédure de convergence de couche physique à utilisateurs multiples ; et
dans lequel le premier champ de signal est un champ de signal à haute efficacité A dans le paquet 802.11ax, et le deuxième champ de signal est un champ de signal à haute efficacité B dans le paquet 802.11ax ; et
le sous-champ de surcharge est un bit réservé du champ de signal à haute efficacité A, ou est une valeur inutilisée dans un schéma de modulation et de codage compris dans le champ de signal à haute efficacité A.

9. Appareil de communication configuré pour fonctionner comme point d'accès dans un système de transmission, l'appareil de communication comprenant :
un module d'envoi (1001), configuré pour envoyer une trame de commande multistation à une pluralité de stations, dans lequel, lorsque la trame de commande multistation est une deuxième trame de réponse, la deuxième trame de réponse est utilisée pour répondre aux trames de données, aux trames de gestion ou aux trames de commande qui sont transmises par la pluralité de stations ; dans lequel la trame de commande multistation comprend un champ de préambule classique et un champ de préambule nouveau, et ne comprend pas de champ de service, de champ de trame de commande d'accès au support, de queue et de bit de remplissage ;
dans lequel le champ de préambule classique comprend un champ d'apprentissage court classique, L-STF, un champ d'apprentissage long classique, L-LTF, un champ de signal classique, L-SIG, et un champ de signal classique répété, RL-SIG ; et le champ de préambule nouveau comprend un premier champ de signal et un deuxième champ de signal ; le premier champ de signal comprend des premières informations de paramètres possédées conjointement par la pluralité de stations, et des deuxièmes informations de paramètres associées au deuxième champ de signal ; et le deuxième champ de signal comprend des informations de commande en correspondance biunivoque avec chaque station de la pluralité de stations ;
dans lequel les premières informations de paramètres possédées conjointement par la pluralité de stations comprennent des informations d'identification d'une extrémité de transmission qui envoie des données à chaque station de la pluralité de stations ; et
dans lequel les deuxièmes informations de paramètres comprennent : une quantité de symboles OFDM du deuxième champ de signal, et un schéma de modulation et de codage du deuxième champ de signal, ou les deuxièmes informations de paramètres comprennent : une quantité de stations, et un schéma de modulation et de codage du deuxième champ de signal ; et
dans lequel le premier champ de signal comprend également un sous-champ de surcharge, et le sous-champ de surcharge comprend des premières informations d'indication qui identifient la trame de commande multistation comme étant une trame de commande multistation à paquets de données nulles NDP, moyennant quoi, lors de la réception d'une trame individuelle, une extrémité de réception identifie, sur la base des premières informations d'identification, un type de la trame individuelle comme étant un type de trame de commande multistation NDP, ou un type de trame existant avant la surcharge d'une trame de commande multistation ;
ou
dans lequel le premier champ de signal comprend également un sous-champ de surcharge, et le sous-champ de surcharge comprend des deuxièmes informations d'indication qui identifient la trame de commande multistation comme étant une trame d'acquittement de bloc multistation NDP, moyennant quoi, lors de la réception d'une trame individuelle, une extrémité de réception identifie, sur la base des deuxièmes informations d'identification, un type de la trame individuelle comme étant un type de trame d'acquittement de bloc multistation NDP, ou un type de trame existant avant la surcharge d'une trame de commande multistation ;
dans lequel une trame existant avant la surcharge est un paquet 802.11ax, le paquet 802.11ax ayant une structure d'unité de données de protocole de procédure de convergence de couche physique à utilisateurs multiples ; et
dans lequel le premier champ de signal est un champ de signal à haute efficacité A dans le paquet 802.11ax, et le deuxième champ de signal est un champ de signal à haute efficacité B dans le paquet 802.11ax ; et
le sous-champ de surcharge est un bit réservé du champ de signal à haute efficacité A, ou est une valeur inutilisée dans un schéma de modulation et de codage compris dans le champ de signal à haute efficacité A.

10. Appareil de communication selon la revendication 8 ou 9, dans lequel le premier champ de signal comprend également un champ d'indication de type de la trame de commande multistation NDP ; le champ d'indication de type est utilisé pour indiquer un type de la trame de commande multistation NDP ; le type de la trame de commande multistation NDP comprend au moins une trame parmi une trame d'acquittement de bloc multistation NDP, une trame de demande d'envoi multistation NDP et une trame de demande d'acquittement de bloc multistation NDP ; la trame de demande d'envoi multistation NDP et la trame de demande d'acquittement de bloc multistation NDP sont des trames de demande ; et la trame d'acquittement de bloc multistation NDP est la première trame de réponse ou la deuxième trame de réponse.
